# EUROPÄISCHE PATENTSCHRIFT

(11) **EP 4 263 023 B1**
(45) Veröffentlichungstag und Bekanntmachung des Hinweises auf die Patenterteilung: **14.10.2026**
(21) Anmeldenummer: 21844200.2
(22) Anmeldetag: 14.12.2021
(51) Int. Cl.: B01D 46/00, B01D 46/90, B22F 10/00

(54) **ENTFERNEN EINES TEILS EINER PARTIKELSAMMELVORRICHTUNG**
REPLACEMENT OF A PART OF A PARTICLE COLLECTION DEVICE
REMPLACEMENT D'UNE PARTIE D'UN DISPOSITIF DE COLLECTE DE PARTICULES

(30) Priorität: 18.12.2020 DE 102020134299
(43) Veröffentlichungstag der Anmeldung: 25.10.2023
(73) Patentinhaber: EOS GmbH Electro Optical Systems, 82152 Krailling (DE)
(72) Erfinder: KLEINHANS, Ulrich, 86931 Prittriching (DE); STRÖBEL, Philip, 91746 Weidenbach (DE); SCHMUTZLER, Christoph, 82110 Germering (DE); KINDERMANN, Marbod, 81243 München (DE)
(74) Vertreter: Beckord & Niedlich Patentanwälte PartG mbB
(86) Internationale Anmeldenummer: PCT/EP2021/085782
(87) Internationale Veröffentlichungsnummer: WO 2022/129105

(56) Entgegenhaltungen:
- CN-A- 109 045 855
- CN-A- 109 248 508
- DE-A1- 102012 004 587
- DE-B3- 102008 060 600
- JP-A- H0 416 209
- US-A1- 2018 244 034

## Beschreibung

Die vorliegende Erfindung betrifft ein Verfahren zum Entfernen eines Teils einer Partikelsammelvorrichtung, eine Prozessgas-Reinigungsvorrichtung, eine Inertisierungsvorrichtung sowie einen Maschinenpark.

Bei der Herstellung von Prototypen und inzwischen auch in der Serienfertigung werden additive Fertigungsprozesse immer relevanter. Im Allgemeinen sind unter "additiven Fertigungsprozessen" solche Fertigungsprozesse zu verstehen, bei denen, in der Regel auf Basis von digitalen 3D-Konstruktionsdaten, durch das Anlagern von Material ein Fertigungsprodukt bzw. Bauteil aufgebaut wird. Der Aufbau erfolgt meist dadurch, dass ein Aufbaumaterial schichtweise aufgebracht und selektiv verfestigt wird. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping", die Herstellung von Werkzeugen als "Rapid Tooling" und die Herstellung von Serienprodukten als "Direct Manufacturing" bezeichnet.

Die selektive Verfestigung des Aufbaumaterials erfolgt oftmals dadurch, dass wiederholt dünne Schichten des meist pulverförmigen Aufbaumaterials übereinander aufgebracht und durch räumlich begrenztes Bestrahlen, z. B. mittels Licht- und/oder Wärme- und/oder Teilchenstrahlung, an den Stellen verfestigt wird, die nach der Fertigung zum herzustellenden Fertigungsprodukt gehören sollen. Ein Beispiel für ein mit einer Bestrahlung arbeitendes Verfahren ist "Laser Powder Bed Fusion" bzw. "Selektives Laserschmelzen". Die Pulverkörner des Aufbaumaterials werden im Zuge des Verfestigens mit Hilfe der durch die Strahlung an dieser Stelle lokal eingebrachten Energie teilweise oder vollständig aufgeschmolzen. Nach einer Abkühlung sind diese Pulverkörner dann miteinander in Form eines Festkörpers miteinander verbunden.

Bei einer solchen Herstellung ist es häufig erforderlich, dass ein Prozessgas zu Inertisierungs, Kühl- oder Abführungszwecken (insbesondere mit einem Gebläse) durch die Prozesskammer geleitet wird. Das austretende Prozessgas führt dabei in der Regel Partikel des Aufbaumaterials und/oder bei dem Prozess entstehende Partikel mit. Insbesondere bei Verwendung metallischer Aufbaumaterialen entstehende Metallkondensate sind zum Teil hoch reaktiv und können bereits bei Raumtemperatur mit geringen Mengen von Luftsauerstoff unter starker Wärmefreisetzung reagieren.

Um eine unerwünschte Kontamination zu verhindern, beispielsweise um einer schleichenden Verschmutzung der Prozesskammer und/oder des Gebläses entgegen zu wirken, ist es notwendig, das Prozessgas nach dem Austritt aus der Prozesskammer zu filtern. Durch die hohe Reaktivität der Partikel kann es jedoch im Bereich von Filtern oder Sammelstellen, an denen sich die in dem Prozessgas mitgeführten Partikel ansammeln, zu unkontrollierten Metall- bzw. Filterbränden oder Staubexplosionen kommen. Dieses Risiko besteht verstärkt, wenn beispielsweise eine entsprechende Sammelstelle oder Filterkammer zum Wechsel des oder der Sammelbehälter bzw. Filter geöffnet wird, wodurch sich eine Reaktionswahrscheinlichkeit durch die damit verbundene vermehrte Zufuhr von Oxidationsmittel, beispielsweise Luftsauerstoff erhöht.

Die Schriften CN 109 045 855 A, DE 10 2012 004587 A1, JP H04 16209 A zeigen Vorrichtungen bzw. Verfahren, bei denen die Prozesskammer und die Partikelsammelvorrichtung einer additiven Fertigungsvorrichtung mit Inertisierungsmitteln gefüllt werden. Teilweise sind Optionen angegeben, die gesamte Partikelsammelvorrichtung unter Beibehaltung des Einschlusses mit dem Inertisierungsmittel zu Entfernen.

Es ist eine Aufgabe der vorliegenden Erfindung, ein sichereres Entfernen von Teilen einer Partikelsammelvorrichtung, die mit reaktiven Partikeln behaftet sind, zu ermöglichen.

Diese Aufgabe wird durch Verfahren zum Entfernen eines Teils einer Partikelsammelvorrichtung nach Anspruch 1, eine Inertisierungsvorrichtung nach Anspruch 11 sowie einen Maschinenpark nach Anspruch 15 gelöst.

Die Erfindung befasst sich dabei mit dem Gebiet der additiven Fertigung, wobei diese Fertigung in einer (geschlossenen) Prozesskammer erfolgt, durch die ein Prozessgas geleitet wird, welches im Anschluss gereinigt bzw. gefiltert wird. Als Prozessgas wird hier das aus einer Prozesskammer abgeführte, insbesondere abgesaugte, Gas verstanden, das je nach Herstellprozess auch ein Inertgas sein oder dieses umfassen kann. In dem Prozessgas können sowohl unverfestigte Anteile eines Aufbaumaterials sowie Prozessnebenprodukte, wie Kondensate, beispielsweise Metallkondensate, oder Spratzer enthalten sein. Derartige im Prozessgas mitgeführte Bestandteile werden unter dem Begriff "Partikel" zusammengefasst. Wie bereits beschrieben, sind die Partikel zumindest leichtentzündlich oder noch reaktiver. Das heißt, aufgrund ihrer feinen Körnung sind sie zumindest so reaktiv, dass sie sich mit Sauerstoff der Umgebung bereits bei kurzem Kontakt mit einer Zündquelle, durch Erwärmung mittels externer Wärmequelle oder bereits durch geringe mechanische Aktivierung, wie z. B. Stöße, Rütteln, Reibung der Partikel unter sich oder dergleichen, entzünden können. Insbesondere handelt es sich bei den Partikeln um pyrophore Partikel, also um Partikel, die (fein verteilt) schon bei Raumtemperatur und an der Umgebungsluft so heftig mit Sauerstoff reagieren, dass die Stoffe glühen oder sogar Feuererscheinung zeigen. Das heißt, es handelt es sich bei den Partikeln insbesondere um bei Raumtemperatur und unter normalen Umgebungsbedingungen selbstentzündliche Partikel.

Das eingangs genannte Verfahren beschreibt das Entfernen eines Teils einer Partikelsammelvorrichtung, das mit solchen zumindest leichtentzündlichen Partikeln beladen ist. Das Teil der Partikelsammelvorrichtung wird dabei aus einer Prozessgas-Reinigungsvorrichtung einer additiven Herstellvorrichtung entfernt. Das Verfahren umfasst dazu zumindest folgende Schritte. In einem Schritt wird ein die Partikel im Wesentlichen einschließendes Inertgas bereitgestellt. In einem weiteren Schritt wird das Teil der Partikelsammelvorrichtung aus der Prozessgas-Reinigungsvorrichtung entfernt, wobei der Einschluss der Partikel im Inertgas beibehalten wird.

Die Prozessgas-Reinigungsvorrichtung umfasst alle Komponenten, die für die Prozessgas-Aufreinigung benötigt werden. Insbesondere wird ihr das die Partikel enthaltende Prozessgas mittels einer Schmutzgaszuführung zugeführt und das in ihr gereinigte Gas mittels eines Reingasauslasses wieder zur additiven Herstellervorrichtung zurückgeführt.

Die Partikelsammelvorrichtung umfasst zumindest die Komponenten bzw. Teile der Prozessgas-Reinigungsvorrichtung, an denen sich die Partikel im Betrieb ansammeln. Dabei handelt es sich insbesondere um Filter bzw. Filtereinheiten und/oder Sammelbehälter für die Partikel, wobei auch Abscheideeinheiten wie z. B. Zyklone, Schwerkraft-, Trägheits- oder Prallabscheider in der Partikelsammelvorrichtung umfasst sein können. An Teilen der Partikelsammelvorrichtung lagern sich also nach einer Zeit der Reinigung des Prozessgases Partikel an, sodass die Teile mit Partikeln beladen sind. D. h., eine Filtereinheit ist beispielsweise mit den Partikeln behaftet oder ein Sammelbehälter ist mit den Partikeln befüllt.

Ein Inertgas beschreibt allgemein ein Gas, das sich an bestimmten chemischen Vorgängen nicht beteiligt. Das bedeutet in Bezug zur Erfindung insbesondere, dass das Inertgas nicht mit den abgeschiedenen Partikeln reagiert. Da in diesem Sinne auch das Prozessgas ein Inertgas ist, kann das Bereitstellen des Inertgases z. B. in einfacher Weise durch das Bereitstellen des Prozessgases realisiert sein.

Alternativ oder zusätzlich kann das Inertgas aber beispielsweise auch mittels einer Inertisierungsvorrichtung bereitgestellt werden, wie weiter unten noch im Detail beschrieben wird.

Grundsätzlich sind als Alternative zu einem Inertgas beliebige Mittel zur Reduzierung einer Brandgefahr geeignet, wie z. B. andere Inertmaterialien, Löschmittel, Reaktanden, Benetzungsmittel, Öle, Schaum, Trockeneis oder dergleichen. Für die weiteren nachgelagerten Verfahrensabläufe, wie z. B. die Wiederaufbereitung einzelner Komponenten oder die Reinigung der Prozessgas-Reinigungsvorrichtung von Verschmutzungen durch andere Inertmaterialien, hat sich jedoch die Verwendung von Inertgasen als am besten geeignet gezeigt.

Dass die Partikel "im Wesentlichen" mit dem Inertgas eingeschlossen sind, bedeutet, dass sich bei dem Einschluss z. B. um einen gasdichten Einschluss in einem Behälter handeln kann. Der Einschluss kann aber beispielsweise auch mittels einer Inertgaswolke realisiert sein, die die Partikel zwar nicht vollständig gasdicht umgibt, sie jedoch umhüllt und so vor dem Einfluss anderer reaktiver Gase schützt. Mit anderen Worten wird mittels des Inertgases zumindest eine Schutzhülle bzw. Pufferzone um den mit Partikeln beladenen Teil der Partikelsammelvorrichtung erzeugt.

Das Entfernen des Teils der Partikelsammelvorrichtung ist insbesondere ein Teilschritt bei einem Austausch dieser Komponente. D. h. nach dem Entfernen wird das Teil durch ein ähnliches, gleiches oder sogar durch dasselbe jedoch wiederaufbereitete Teil ersetzt.

Um ein sicheres Entfernen zu ermöglichen, wird der Einschluss der Partikel im Inertgas beim Entfernen beibehalten. Der Einschluss wird insbesondere solange aufrechterhalten, bis das Teil sicher verbracht worden ist. D. h. im Fall eines gasdichten Einschlusses wird dieser beibehalten, im Fall eines nicht-gasdichten Einschlusses muss die Pufferzone aus Inertgas weiter bereitgestellt werden. Letzteres erfolgt beispielsweise mittels einer erfindungsgemäßen Inertisierungsvorrichtung, die weiter unten noch im Detail beschrieben wird.

Die Prozessgas-Reinigungsvorrichtung umfasst bevorzugt einen entfernbaren Sammelbehälter für zumindest leichtentzündliche Partikel, die in der Prozessgas-Reinigungsvorrichtung abgeschieden werden. Dabei weist der Sammelbehälter vorzugsweise ein zumindest gegen eindringendes Gas und/oder eindringende Partikel dichtes, erstes Schott auf, das ausgebildet ist, um die Partikel beim Entfernen des Sammelbehälters mit einem Inertgas einzuschließen.

Der Sammelbehälter ist also vorzugsweise ein zu entfernender Teil der Partikelsammelvorrichtung. Bei dem Sammelbehälter handelt es sich um ein Gefäß zur sicheren Aufnahme der in der Prozessgas-Reinigungsvorrichtung abgeschiedenen Partikel. D. h. der Sammelbehälter nimmt bevorzugt einen Großteil der abgeschiedenen, zumindest leichtentzündlichen Partikel auf, besonders bevorzugt 90% und mehr. Dazu werden die Partikel mit geeigneten Mitteln, wie z. B. einem Sammeltrichter, in den Sammelbehälter geleitet.

Dass der Sammelbehälter "entfernbar" ist, bedeutet, dass er und die Prozessgas-Reinigungsvorrichtung bevorzugt komplementäre Kopplungsstücke umfassen, die gemeinsam einen gasdichten und partikeldichten Kraft- und/oder Formschluss ausbilden, wenn sie bestimmungsgemäß verbunden sind. Diese Verbindung lässt sich jedoch mit wenigen Handgriffen lösen, sodass der Sammelbehälter von der Prozessgas-Reinigungsvorrichtung vorteilhaft einfach getrennt werden kann.

Um die Partikel mit dem Inertgas einzuschließen, weist der Sammelbehälter das zumindest gegen eindringendes Gas bzw. eindringende Partikel dichte, erste Schott auf. Als Schott wird hier allgemein eine Verschlusseinrichtung verstanden. Es kann z. B. als gasdichte Klappe, gasdichte Irisblende, gasdichter Schieber oder dergleichen ausgebildet sein. Dass es zumindest gegen eindringendes Gas dicht ist, bedeutet, dass es z. B. zusätzlich ein Überdruckventil aufweisen kann, um bis zu einem Druckausgleich das Inertgas aus dem Sammelbehälter abzulassen. Als Inertgas dient in diesem Fall insbesondere des Prozessgas. Der Sammelbehälter mit den gasdicht im Inertgas eingeschlossenen Partikeln kann zu einem sicheren Lagerplatz, zu einer externen Passiviervorrichtung oder zu einer Aufbereitungsvorrichtung für die Partikel und/oder den Sammelbehälter gebracht werden. Während des Transports ist eine Entzündungsgefahr der Partikel vorteilhafterweise wesentlich verringert oder sogar vollständig vermieden.

Dass der Sammelbehälter bei oder vor dem Entfernen verschlossen wird, bedeutet beispielsweise, dass das Schott in einem Schritt vor dem Entfernen geschlossen wird. Alternativ kann das Verschließen - und bevorzugt auch das Öffnen beim Wiedereinbringen des Sammelbehälters - automatisch, insbesondere durch eine entsprechende Mechanik oder elektrisch, z. B: mittels eines gemeinsamen Aktors, gleichzeitig mit dem Entfernvorgang erfolgen. Dabei wird jedoch sichergestellt, dass das Inertgas im Sammelbehälter eingeschlossen wird und kein Gasaustausch mit der Atmosphäre der Umgebung stattfindet.

Wie zuvor bereits erwähnt, lagern sich die Partikel auch an Filtereinheiten einer Prozessgas-Reinigungsvorrichtung an. Entsprechend müssen auch diese Teile der Partikelsammelvorrichtung bei Bedarf entfernt und gegebenenfalls getauscht werden. Die eingangs genannte Inertisierungsvorrichtung dient dazu, die Entzündungsgefahr der an der Filtereinheit anhaftenden, zumindest leichtentzündlichen Partikel wesentlich zu reduzieren oder sogar vollständig zu vermeiden. Hierfür umfasst die Inertisierungsvorrichtung ein zur ersten Filtereinheit passendes erstes Anschlussstück und eine Inertgasversorgung zur Beströmung der ersten Filtereinheit mit Inertgas beim Entfernen der Filtereinheit.

Umfasst die Prozessgas Reinigungsvorrichtung mehr Filtereinheiten als die erste Filtereinheit, so sind üblicherweise alle Filtereinheiten gleich ausgestaltet. Die Unterscheidung zwischen erster Filtereinheit und zweiter Filtereinheit betrifft also lediglich die Prozessschritte beim Entfernen, bei denen das erste Anschlussstück mit der ersten Filtereinheit verbunden wird und die anderen (zweiten) Filtereinheiten mit zweiten Anschlussstücken abgedeckt werden. Daher werden im Folgenden die erste Filtereinheit und die zweite Filtereinheit gemeinsam einfach als "Filtereinheiten" bezeichnet, sofern es nicht auf die Differenzierung ankommt. Eine Filtereinheit umfasst ein oder mehrere Filterelemente sowie bevorzugt eine Halterung dafür, mit der die Filtereinheit zudem in eine passende Aufnahme der Prozessgas-Reinigungsvorrichtung eingesetzt wird. Die Filterelemente sind in ihrer Struktur so ausgestaltet, dass sie das Gas passieren lassen, aber die Partikel zurückhalten. Sie weisen dazu ein Filtermedium, vorzugsweise ein Filtergewebe und/oder Filtervlies auf. Insbesondere umfasst die Prozessgas-Reinigungsvorrichtung mehrere, bevorzugt gleich ausgebildete, Filtereinheiten, die eine Filteranordnung bilden.

Das erste Anschlussstück der Inertisierungsvorrichtung passt zu der Filtereinheit und wird für seinen bestimmungsgemäßen Gebrauch mit der Filtereinheit verbunden. D. h. es ist in seinen Abmessungen und/oder in der Anordnung seiner Komponenten auf die Filtereinheit abgestimmt. Die Inertgasversorgung stellt das Inertgas bereit und sorgt somit im Betrieb für die Beströmung der Filtereinheit mit dem Inertgas. Sie wird im Detail weiter unter beschrieben. Durch die ständige Beströmung der Filtereinheit beim gesamten Entfernungsprozess mit Inertgas wird eine Inertgaswolke um die Filtereinheit erzeugt, die die anhaftenden Partikel einschließt und vor reaktiven Gasen der Umgebung schützt.

Die zuvor beschriebene Inertisierungsvorrichtung wird bevorzugt zum Entfernen der Filtereinheiten einer erfindungsgemäßen Prozessgas-Reinigungsvorrichtung verwendet. Grundsätzlich stellt die Inertisierungsvorrichtung jedoch eine eigenständige Idee dar. Beide Aspekte der Erfindung verfolgen zusammen jedoch den synergetischen Zweck, das Entfernen von Teilen der Partikelsammelvorrichtung sicherer zu machen und sind im Kern, nämlich dem Bereitstellen und Beibehalten eines Inertgasschutzes zum Entfernen eines Teils der Partikelsammelvorrichtung, vereint.

Der eingangs genannte Maschinenpark umfasst eine erfindungsgemäße Inertisierungsvorrichtung. Bevorzugt umfasst er zusätzlich zumindest eine additive Herstellvorrichtung mit einer zuvor beschriebenen Prozessgas-Reinigungsvorrichtung und bevorzugt eine Mehrzahl von Sammelbehältern. Dadurch, dass in einem solchen Maschinenpark die Sammelbehälter und bevorzugt auch die Inertisierungsvorrichtung für eine Mehrzahl von additiven Herstellvorrichtungen genutzt werden können, ergeben sich besonders günstige Skalierungseffekte. Denn die Sammelbehälter können z. B. aufbereitet werden und sind zwischen Prozessgas-Reinigungsvorrichtungen mit identischen Kopplungsstücken austauschbar. Jedoch müssen planbarerweise die Sammelbehälter nicht zeitgleich getauscht werden. Auf ähnliche Weise kann auch die Inertisierungsvorrichtung für den Austausch von identischen bzw. ausreichend ähnlichen Filtereinheiten von mehreren additiven Herstellvorrichtungen genutzt werden.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Wie oben bereits beschrieben, umfasst die Partikelsammelvorrichtung bevorzugt zumindest eine Filtereinheit, an der die Partikel - nach einer Zeit der Prozessgas-Reinigung - anhaften und die beim Entfernen mit dem Inertgas beströmt wird. Dabei erfolgt die Beströmung mit dem Inertgas bevorzugt bereits vor dem Entfernen. Dadurch wird bereits vor dem Entfernen die Durchströmung der Filtereinheit und somit die schützende Inertgaswolke etabliert bzw. die inerte Atmosphäre im unteren Bereich der Filterkammer aufrechterhalten.

Bevorzugt wird während des gesamten Entfernungsprozesses eine Gasqualität ermittelt und die Beströmung mit dem Inertgas in Abhängigkeit der Gasqualität geregelt. Dadurch kann eine homogene, die gesamte Filtereinheit schützende Inertgaswolke bereitgestellt werden.

Die Beströmung mit dem Inertgas erfolgt vorzugsweise mithilfe einer zur Filtereinheit passenden Inertisierungsvorrichtung. Die Inertisierungsvorrichtung bzw. die Partikelsammelvorrichtung umfasst bevorzugt einen Gassensor zum Messen der Gasqualität bzw. der Konzentration des/der Inertgase(s) und/oder der Konzentration von Sauerstoff. Zudem umfasst die Inertisierungsvorrichtung bevorzugt eine Durchflussregelung zur Regelung des Gasstroms in Abhängigkeit von der Gasqualität. Die Gasqualität kann dazu z. B. stichprobenhaft in unregelmäßigen Abständen ermittelt werden. Bevorzugt wird die Gasqualität jedoch in regelmäßigen Abständen, besonders bevorzugt kontinuierlich, ermittelt. Die Beströmung erfolgt bevorzugt zudem in Abhängigkeit von einer an der Filtereinheit gemessenen Temperatur und/oder eines Drucks. Zur Ermittlung dieser Werte weist die Inertisierungsvorrichtung bevorzugt einen Temperatursensor und/oder ein Manometer auf. Bei der Überschreitung vorgegebener Grenzwerte wird bevorzugt ein Warnsignal ausgegeben. Als Grenzwert für die Regelung bzw. Warnung dient bevorzugt ein ermittelter O2-Referenzwert von maximal 10 Volumenprozent, besonders bevorzugt von maximal 5 Volumenprozent, ganz besonders bevorzugt von maximal 3 Volumenprozent.

Bevorzugt weist das erste Anschlussstück der Inertisierungsvorrichtung einen Deckel auf, der eine Öffnung der Filtereinheit beim bestimmungsgemäßen Gebrauch, bevorzugt gasdicht, verschließt. Der Deckel ist dabei bevorzugt selbstabdichtend oder weist eine entsprechende Dichtung auf. Dadurch wird reduziert bzw. vermieden, dass durch diese Öffnung Sauerstoff eindringt bzw. Inertgas entweicht, sodass die Filterelemente gezielter beströmt werden können.

Des Weiteren umfasst das erste Anschlussstück bevorzugt eine Arretiereinrichtung. Die Arretiereinrichtung ist so ausgebildet, dass sie im bestimmungsgemäßen Gebrauch das Anschlussstück fest, besonders bevorzugt starr, mit der zu entfernenden Filtereinheit verbindet. Dadurch wird zum einen der gasdichte Verschluss der Öffnung der Filtereinheit sichergestellt, zum anderen wird eine direkte Berührung der Filtereinheit durch das Personal vermieden, da die Filtereinheit auf diese Weise mittels des ersten Anschlussstücks entnommen werden kann. Dies erhöht zusätzlich die Sicherheit und die Ergonomie für das Personal. Die Arretiereinrichtung umfasst dazu bevorzugt eine Anzahl von Arretierelementen, die im bestimmungsgemäßen Gebrauch einen Formschluss und/oder einen Kraftschluss mit der Filtereinheit ausbilden, der bei Bedarf lösbar ist.

Die Partikelsammelvorrichtung umfasst vorzugsweise einen Sammelbehälter, der - nach einer Zeit der Prozessgas-Reinigung - mit den Partikeln befüllt ist und in dem beim Entfernen das Inertgas und die Partikel gasdicht eingeschlossen werden. D. h. die Partikel werden für das Entfernen im Sammelbehälter, wie oben bereits beschrieben, von Oxidationsmitteln - z. B. Umgebungssauerstoff und anderen reaktiven Gasen, Aerosolen oder Flüssigkeiten - abgeschottet.

Das Entfernen des Sammelbehälters erfolgt bevorzugt zumindest zum Teil auch während eines Abscheidevorgangs bzw. eines Partikelabscheidevorgangs. Die Partikel können, falls z. B. ein Abreinigungsvorgang eines oder mehrerer Filterelemente nicht auf einen Zeitpunkt verschoben werden kann, an dem der entleerte Sammelbehälter wieder gasdicht an die Partikelsammelvorrichtung angedockt wurde, bevorzugt in einem Zwischenbehälter gesammelt werden und die Prozessgas-Reinigungsvorrichtung arbeitet unterbrechungsfrei weiter. Dadurch kann vorteilhafterweise auch die additive Herstellvorrichtung unterbrechungsfrei weiterarbeiten. Das Entfernen des Sammelbehälters ist also dadurch zeitlich unabhängig vom Betrieb der Maschine und damit verbundenen Abreinigungsvorgängen. Die Abreinigung der Filtereinheiten kann somit bei entferntem Sammelbehälter oder während des Entfernens des Sammelbehälters durchgeführt werden.

Der Zwischenbehälter ist somit ein Hilfsreservoir, das von der Prozessgas-Reinigungsvorrichtung umfasst ist. Es ist dabei bevorzugt so ausgestaltet, dass es zumindest die Menge von Partikeln aufnehmen kann, die typischerweise während eines Austauschs des Sammelbehälters anfällt. Der Zwischenbehälter kann als zusätzliche Kammer bzw. Kavität der Prozessgas-Reinigungsvorrichtung ausgebildet sein, er kann aber z. B. auch zumindest zum Teil durch das Volumen eines Sammeltrichters oder dergleichen realisiert sein.

Das Inertgas weist bevorzugt einen Stickstoffanteil und/oder Argonanteil von mindestens 45%, besonders bevorzugt von mindestens 90%, ganz besonders bevorzugt von mindestens 99% auf. Neben Argon und Stickstoff können aber auch andere Inertgase, z. B. Helium oder Neon, oder Mischungen davon verwendet werden.

Mittels dieser Gasanteile ist eine Inertisierung der Partikel grundsätzlich möglich. Dabei ermöglichen höhere Anteile von Stickstoff bzw. Argon (oder eines anderen Inertgases) eine bessere Inertisierung, sie sind jedoch beispielsweise gegenüber dem Gasverbrauch und sonstigen Bedingungen abzuwägen. Besonders bevorzugt weist das Inertgas die gleiche Zusammensetzung wie das Prozessgas auf. Die Verwendung von Stickstoff hat den Vorteil, dass Stickstoff wesentlicher Bestandteil der Umgebungsluft ist und daher im Wesentlichen gefahrlos auch für die Beströmung mittels der Inertisierungsvorrichtung verwendet werden kann.

Nach dem Entfernen werden der Teil der Partikelsammelvorrichtung und/oder die gesammelten Partikel bevorzugt entsorgt oder wiederaufbereitet.

Von einer Filtereinheit abgereinigte bzw. gesammelte Partikel sind bevorzugt (unmittelbar) als Aufbaumaterial in einem (erneuten) additiven Fertigungsprozess oder als Kondensate für andere Fertigungsprozesse nutzbar. Denn beispielsweise das Metallkondensat, welches nach der Abreinigung des Filters in dem Sammelbehälter gesammelt wird, kann ggf. ohne Aufreinigung recycelt werden. Dies ist insbesondere bei der Verwendung von Metallfiltern mit unbehandelten Oberflächen möglich, die weiter unten noch näher beschrieben sind. Alternativ werden die gesammelten Partikel bevorzugt vor ihrer Entsorgung mit einem geeigneten Passiviermittel passiviert.

Auch die Sammelbehälter können nach ihrer Leerung und falls erforderlich nach einer Reinigung wiederverwendet werden. Bevor sie jedoch wieder an eine Prozessgas-Reinigungsvorrichtung gekoppelt werden, werden sie bevorzugt zunächst mit dem jeweiligen Prozessgas befüllt, um eine Beeinträchtigung der Prozessgas-Atmosphäre in der Prozessgas-Reinigungsvorrichtung bzw. der additiven Herstellvorrichtung zu vermeiden.

Ebenso können bevorzugt die Filtereinheiten nach Bedarf außerhalb der Prozessgas-Reinigungsvorrichtung einer gründlicheren Reinigung und Wiederaufbereitung unterzogen und für eine Wiederverwendung vorbereitet werden.

Vor der Wiederaufbereitung bzw. Entsorgung werden die Filtereinheiten bevorzugt dauerhaft passiviert und in einen sicheren Aufbewahrungsbehälter verbracht. Als Passiviermittel werden bevorzugt Kalk, Sand, Glasmehl, (Bläh-)Glaskugeln verwendet. Alternativ werden die Filtereinheiten bevorzugt in einem sicheren Behälter unter Anwesenheit von Sauerstoff durchoxidiert, bis sie nicht mehr selbst- oder nur noch schwer entzündlich sind.

Der Maschinenpark weist bevorzugt eine gemeinsame Passivierungsstation für die zuvor genannten Passivierungen auf.

Komponenten, die zu stark beeinträchtigt sind, wie z. B. nicht mehr zu reinigende Filter oder unbrauchbar gewordene Partikel, werden bevorzugt fachgerecht entsorgt.

Die Prozessgas-Reinigungsvorrichtung umfasst bevorzugt eine Abscheidungsöffnung und ein gasdichtes zweites Schott, das ausgebildet ist, um die Abscheidungsöffnung beim Entfernen des Sammelbehälters zu verschließen. Dadurch wird sichergestellt, dass die Prozessgasatmosphäre in der Prozessgas-Reinigungsvorrichtung sowie in der additiven Herstellvorrichtung erhalten bleibt. Zudem bleiben die Filterelemente - auch bei einer Entnahme des Sammelbehälters nach dem Ende des additiven Aufbauprozesses - auf diese Weise in der inerten Atmosphäre des Prozessgases. Anderenfalls könnte es auch beim Eintritt kleinerer Mengen an Umgebungsluft zu unerwünschten Reaktionen der Partikel auf den Filterelementen kommen. Zudem wird verhindert, dass die entzündlichen Partikel aus der Prozessgas-Reinigungsvorrichtung austreten. Das gasdichte zweite Schott kann z. B. in ähnlicher Weise wie das gasdichte erste Schott ausgebildet sein.

Bei der Inertisierungsvorrichtung ist bevorzugt zumindest das erste Anschlussstück in Relation zur Prozessgas-Reinigungsvorrichtung zumindest in einem Bereich beweglich und die Inertgasversorgung erfolgt besonders bevorzugt mittels eines flexiblen Schlauchs oder einer Gaspatrone.

Grundsätzlich ist das erste Anschlussstück möglichst frei beweglich. Die Formulierung "zumindest in einem Bereich beweglich" berücksichtigt z. B. bei der Realisierung mittels eines flexiblen Schlauchs die begrenzte Schlauchlänge, innerhalb der das erste Anschlussstück verwendet werden kann. Dabei ist der flexible Schlauch z. B. mit einer Gasflasche, einem Hausgasanschluss, einem Zwischenspeicher(-tank), Puffer oder dergleichen verbunden. Alternativ erfolgt die Inertgasversorgung mittels einer Gaspatrone bzw. Gaskartusche, die beispielsweise am ersten Anschlussstück angebracht sein kann, wodurch die Inertgasversorgung frei beweglich ausgebildet ist. Die Gaspatrone ist dabei bevorzugt so ausgelegt, dass sie eine ausreichende Inertgasmenge für das Entfernen einer Filtereinheit bereitstellt. Besonders bevorzugt ist sie so ausgelegt, dass sie eine ausreichende Inertgasmenge für das Entfernen aller Filtereinheiten der Prozessgas-Reinigungsvorrichtung bereitstellt. D. h. die Inertgasmenge ist bevorzugt ausreichend für typische Inertisierungsdauern von 5 Minuten, besonders bevorzugt 10 Minuten, ganz besonders bevorzugt 60 Minuten.

Die Inertisierungsvorrichtung weist bevorzugt eine automatische Abschaltung auf, die die Beströmung mit dem Inertgas bevorzugt nach höchstens 30 Minuten, besonders bevorzugt nach höchstens 20 Minuten, ganz besonders bevorzugt nach höchstens 10 Minuten stoppt. Die Abschaltung kann hierfür z. B. eine Zeitschaltuhr umfassen, die z. B. nach 999 Sekunden, die Gaszufuhr abstellt. Dadurch wird vorteilhafterweise eine Einsparung des Inertgases erreicht. Zudem stellt die automatische Abschaltung sicher, dass keine zu großen Mengen in höherer Konzentration schädlicher Inertgase, wie z. B. Argon, austreten.

Zur Einstellung bzw. Regelung des Volumenstroms des Inertgases weist die Inertgasversorgung bevorzugt zusätzliche Komponenten, wie z. B. einen Druckminderer, ein manuelles oder bevorzugt elektronisches Regelventil, einen Durchflussbegrenzer, einen Absperrhahn oder dergleichen auf.

Bevorzugt umfasst die Inertisierungsvorrichtung einen Ausströmstutzen, der eine Anzahl von Ausströmöffnungen aufweist. Dabei sind die Anzahl und eine Anordnung der Ausströmöffnungen an eine Geometrie der Filtereinheit angepasst. D. h., entsprechend der Formgebung und Dimensionierung der Filtereinheit wird auch der Ausströmstutzen mit den Ausströmöffnungen ausgelegt, um vorteilhafterweise eine möglichst homogene Beströmung aller Bereiche der Filtereinheit zu erreichen. Dabei können die Ausströmöffnungen z. B. regelmäßig oder unregelmäßig am Ausströmstutzen verteilt sein. Der Ausströmstutzen bezeichnet dabei ein, bevorzugt zylindrisches oder konisches, Rohrstück, das z. B. über seine Länge verteilt Löcher als Ausströmöffnungen aufweist. Die Ausströmöffnungen können bevorzugt alternativ als mikroporöse Struktur ausgestaltet sein, z. B. in einem Sinterelement.

Bevorzugt umfasst die Partikelsammelvorrichtung zumindest eine zweite Filtereinheit, die zumindest zeitweise während des Entfernens der ersten Filtereinheit gegenüber einer Umgebungsatmosphäre abgeschottet wird.

Dementsprechend umfasst die Inertisierungsvorrichtung für zumindest eine mit zumindest leichtentzündlichen Partikeln behaftete, zweite Filtereinheit einer Prozessgas-Reinigungsvorrichtung bevorzugt ein zur zweiten Filtereinheit passendes gasdichtes zweites Anschlussstück zur zumindest zeitweisen Abschottung der zweiten Filtereinheit gegenüber einer Umgebungsatmosphäre während des Entfernens der ersten Filtereinheit.

Die zweiten Anschlussstücke sind bevorzugt in Form von passiven Deckeln ausgebildet, um das Eindringen von Sauerstoff unmittelbar in die noch eingesetzten Filtereinheiten bzw. mittelbar via die Öffnung der entnommenen Filtereinheit zu reduzieren bzw. zu vermeiden. Ein passiver, d. h. eine Inertatmosphäre in der Filterkammer bewahrender, Deckel deckt in einer Betriebsposition eine Entnahmeöffnung in der Filterkammer bzw. die Öffnungen der verbliebenen Filtereinheiten im Wesentlichen gasdicht ab. Bevorzugt bildet er einen Formschluss und/oder einen Kraftschluss mit der Entnahmeöffnung aus, der bei Bedarf lösbar ist. Der passive Deckel kann unterseitig eine geeignete Dichtung und oberseitig Griffe zur vereinfachten Handhabung umfassen. Bevorzugt weist die Inertisierungsvorrichtung eine Anzahl von zweiten Anschlussstücken auf, die gleich der Anzahl der Filtereinheiten der Prozessgas-Reinigungsvorrichtung ist.

Die zumindest eine Filtereinheit ist bevorzugt als Oberflächenfilter, besonders bevorzugt als permanenter Oberflächenfilter (im Unterschied zu einem Tiefen- oder Speicherfilter) ausgebildet. Als Permanentfilter (oder "Dauerfilter") werden Filter verstanden, welche im Gegensatz zu üblichen Filtermodellen vielfach (über viele Zyklen hinweg) und/oder dauerhaft im Betrieb der Prozessgas-Reinigungsvorrichtung verbleiben können. Dazu kann ein Permanentfilter nach einer gewissen Zeit gereinigt, also das Filtrat entnommen oder abgestoßen und damit Filtrat aus den Filterporen bzw. dem Filtermaterial und/oder ein auf dem Filter aufliegender Filterkuchen entfernt werden. Ein Permanentfilter muss ein Filtermaterial enthalten, welches eine so hohe mechanische Festigkeit aufweist, dass es bei einer bestimmungsgemäßen, wiederholten Reinigung nicht zerstört oder beschädigt wird. Ein bevorzugtes Beispiel für einen permanenten Oberflächenfilter umfasst ein Metallfilterelement mit einem Metallgitter oder Metallsieb als Filtermaterial oder ein Filterelement mit einem Filtermedium aus Glaswolle oder Keramik. Insbesondere ist ein Filter mit einem Polyestergewebe nicht als Permanentfilter anzusehen, zumindest sofern dieses keine ausreichende mechanische und thermische Beständigkeit aufweist und sich während des Gebrauchs vorzeitig zusetzt. Vorzugsweise kann ein permanenter Oberflächenfilter mindestens 6 Monate, weiter bevorzugt mindestens 1 Jahr, besonders bevorzugt mindestens 2 Jahre bestimmungsgemäß genutzt werden, bevor er entsorgt oder wiederaufbereitet wird. Vorteile eines permanenten Oberflächenfilters können darin bestehen, dass eine Brandgefahr durch Erhitzen von staubförmigem Filtrat deutlich reduziert wird, beispielsweise durch eine gute Wärmeleitung des Filtermaterials oder dadurch, dass er selten ausgewechselt werden muss und seine Abreinigung unter klar definierten, inerten Bedingungen durchgeführt werden kann. Eine Abreinigung kann z. B. dadurch erfolgen, dass ein Druckstoß entgegen der Prozessgasrichtung erfolgt, z. B. mit einem Inertgas wie Stickstoff oder Argon, und dadurch die Poren verstopfendes Filtrat und/oder ein auf dem Filter aufliegender Filterkuchen vom Filter entfernt wird und in den Sammelbehälter fallen kann. Eine gute Wärmeleitung eines Permanentfilters wirkt sich vor allem dann positiv aus, wenn es durch das Eindringen von Oxidationsmittel, beispielsweise Sauerstoff, aufgrund von vorhandenen Undichtigkeiten in einem System und/oder bei einem Filterwechsel und/oder beim Öffnen der Prozesskammer, zu Reaktionen kommen kann.

Gemäß einer bevorzugten Filtereinheit umfasst der Permanentfilter ein Keramikfilterelement und/oder ein Glaswolle-Filterelement alternativ oder in Ergänzung zu einem Metallfilterelement. Eine Mischung unterschiedlicher Filtertypen (also Metallfilter, Keramikfilter und Glaswolle-Filter) ist je nach Anwendung bevorzugt. Hierdurch könnte z. B. die gute Wärmeleitfähigkeit eines Metallfilters mit Vorteilen eines Keramik- oder Glaswolle-Filters kombiniert werden. Beispielsweise können unterschiedliche Filter-Stufen in einem Filter ausgebildet werden.

Eine additive Fertigungsvorrichtung zur Fertigung eines Bauteils in einem additiven Fertigungsprozess umfasst bevorzugt einen Prozessraum, eine Zuführeinrichtung zum schichtweisen Einbringen eines Aufbaumaterials in den Prozessraum, eine Bestrahlungseinheit zur selektiven Verfestigung von Aufbaumaterial im Prozessraum und eine erfindungsgemäße Prozessgas-Reinigungsvorrichtung.

Ein bevorzugtes Verfahren zur additiven Fertigung eines Bauteils in einem additiven Fertigungsprozess mittels einer additiven Fertigungsvorrichtung umfasst die folgenden Schritte:
- Einbringen zumindest einer Schicht eines Aufbaumaterials in einen Prozessraum der Herstellvorrichtung,
- selektive Verfestigung des Aufbaumaterials im Prozessraum mittels einer Bestrahlungseinheit,
- Aufreinigung eines (aus dem Prozessraum austretenden und insbesondere in einem geschlossenen Kreislauf bewegten) Volumens eines Prozessgases der additiven Fertigungsvorrichtung bevorzugt mittels einer erfindungsgemäßen Prozessgas-Reinigungsvorrichtung und
- nach einer Anzahl von Wiederholungen der zuvor genannten Schritte Austausch eines mit Partikeln beladenen Teils einer Partikelsammelvorrichtung der Prozessgas-Reinigungsvorrichtung mittels des erfindungsgemäßen Verfahrens zum Entfernen eines Teils einer Partikelsammelvorrichtung.

Vorzugsweise beträgt eine Strömungsgeschwindigkeit durch eine Fläche der Filtereinheit mindestens 0,1 m/s, weiter bevorzugt 0,3 m/s, besonders bevorzugt mindestens 0,5 m/s, ganz besonders bevorzugt mindestens 1 m/s, und/oder höchstens 5 m/s, besonders bevorzugt höchstens 3 m/s, ganz besonders bevorzugt höchstens 2 m/s.

Die Strömungsgeschwindigkeit bezeichnet dabei die durchschnittliche Geschwindigkeit, mit der das Inertgas auf eine Fläche bzw. auf ein Filtermedium eines Filterelements der Filtereinheit trifft. "Durchschnittlich" bedeutet in diesem Zusammenhang, dass die Strömungsgeschwindigkeiten, z. B. aufgrund der Geometrie oder wegen angelagerter Partikel, lokal abweichen können. Sie wird abhängig von dem gesamten Flächeninhalt der Filterfläche über den zugeführten Volumenstrom von Inertgas eingestellt bzw. geregelt. Die angegebenen Wertebereiche haben sich in Tests als besonders geeignet herausgestellt. Denn bei zu hoher Strömungsgeschwindigkeit besteht die Gefahr, dass Partikel von der Filtereinheit gelöst bzw. heruntergeblasen werden. Demgegenüber kann bei zu geringer Strömungsgeschwindigkeit keine ausreichende Beströmung mit dem Inertgas sichergestellt werden, sodass sich die Gefahr einer Entzündung der Partikel erhöht.

Vorzugsweise beträgt ein Flächeninhalt einer Filteroberfläche einer einzelnen Filtereinheit zumindest 0,5 m², und bevorzugt höchstens 5 m². Besonders bevorzugt beträgt die Filteroberfläche bei einer Filtereinheit mit Metallfilterelementen in etwa 1,7 m² und bei einer Filtereinheit mit Kunststofffilterelementen in etwa 2,4 m². Die Einstellung bzw. Regelung des Volumenstroms des Inertgases bei der Beströmung einer solchen Filtereinheit mittels der Inertisierungsvorrichtung erfolgt besonders bevorzugt in Abhängigkeit vom Flächeninhalt der Filteroberfläche. Abhängig von der Filteroberfläche liegt der Volumenstrom in einem Bereich von nahe 0 L/min, bevorzugt mindestens 5 L/min, besonders bevorzugt mindestens 10 L/min, ganz besonders bevorzugt mindestens 20 L/min. Höchstens beträgt der Volumenstrom 100 L/min. Bei einer Filtereinheit mit einem Kunststofffilterelement und einer Filteroberfläche von 2,4 m² beträgt der Volumenstrom ganz besonders bevorzugt in etwa 60 L/min. Bei einer Filtereinheit mit einem Metallfilterelement und einer Filteroberfläche von 1,7 m² beträgt der Volumenstrom für Stickstoff als Inertgas ganz besonders bevorzugt in etwa 60 L/min (für andere Inertgase ggf. abweichend aufgrund verschiedener Dichte und Viskosität).

Gemäß einer bevorzugten Prozessgas-Reinigungsvorrichtung ist die Filtereinheit so angeordnet, dass eine in Kontakt mit dem aufzureinigenden Prozessgas tretende Schmutzgasseite eine (außen an der Filtereinheit angeordnete) Außenoberfläche ist.

Alternativ oder ergänzend ist die Filtereinheit bevorzugt so in der Prozessgas-Reinigungsvorrichtung angeordnet, dass eine in Kontakt mit dem aufzureinigenden Prozessgas tretende Schmutzgasseite eine (im Inneren des Filters angeordnete) Innenoberfläche der Filtereinheit ist. Diese Variante der innenliegenden Schmutzgasseite hat den Vorteil, dass das abgereinigte Kondensat an der Innenseite der Filter hängen bleibt, was in einer reduzierten Brandgefahr beim Wechsel resultiert und dadurch eine geringere Gefahr für Bediener bei Fehlbedienung. Zudem kann bei einer Inertisierung zum Entfernen der Filtereinheit das Inertgas effektiver (d. h. kostensparend durch geringere benötigte Volumina) eingesetzt werden, indem es auf der Innenseite der Filtereinheit eingeleitet wird.

Bevorzugt ist die zumindest eine Filtereinheit der Prozessgas-Reinigungsvorrichtung dazu ausgebildet und so in der Prozessgas-Reinigungsvorrichtung angeordnet, dass eine Abreinigung der Filtereinheit in einem parallel zu einem Bauprozess der Fertigungsvorrichtung laufenden Reinigungsbetrieb der Prozessgas-Reinigungsvorrichtung durchführbar ist. Eine diesbezügliche "Online-Abreinigung" also eine Abreinigung ohne Baujob-Unterbrechung, erfolgt bevorzugt bei einem geringeren Druck als eine Abreinigung während einer Unterbrechung des Baujobs oder zwischen Baujobs, die bei ca. 5 bar erfolgen sollte. Ein bevorzugter Druckbereich für eine Online-Abreinigung liegt zwischen 2 bis 5 bar.

Bei einem bevorzugten Verfahren zur additiven Fertigung erfolgt eine Abreinigung der Filtereinheit während des (laufenden) additiven Fertigungsprozesses, insbesondere ohne eine Unterbrechung des Fertigungsprozesses.

Bei einem bevorzugten Verfahren zur additiven Fertigung erfolgt eine Abreinigung der Filtereinheit in Abhängigkeit eines Differenzdruckwerts von Prozessgas (über die Filtereinheit). Dazu beträgt ein bevorzugter Differenzdruckwert zumindest 10 mbar, vorzugsweise zumindest 20 mbar, bevorzugt zumindest 30 mbar, besonders bevorzugt zumindest 40 mbar. Alternativ oder zusätzlich beträgt ein Abreinigungsdruckstoß zur Abreinigung der Filtereinheit weniger als 5 bar, vorzugsweise weniger als 4 bar, bevorzugt weniger als 3 bar, besonders bevorzugt 2,5 bar. Dieser Druck hängt jedoch von der Fläche und der Form der Filtereinheit ab. Es kann auch bevorzugt sein, dass ein Abreinigungsdruckstoß mehr als 2 oder vorzugsweise mehr als 3 bar, insbesondere mehr als 4 bar hat. Bevorzugt umfasst die Prozessgas-Reinigungsvorrichtung Puffervolumina, welche den Druckstoß abfangen.

Das erfindungsgemäße Verfahren zum Entfernen eines Teils der Partikelsammelvorrichtung wird bevorzugt nach einer Mehrzahl von Abscheidevorgängen bzw. Abreinigungsvorgängen durchgeführt. Dadurch werden effiziente Betriebsabläufe ermöglicht. Insbesondere erfolgt ein Entfernen bzw. Austausch des Sammelbehälters in Abhängigkeit des Füllstands des Sammelbehälters nach ca. 100 Abreinigungsvorgängen einzelner Filtereinheiten. Ein Entfernen bzw. Austausch der Filtereinheiten erfolgt nach in etwa 100 Abreinigungsvorgängen der einzelnen Filtereinheit.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 eine schematische, teilweise im Schnitt dargestellte Ansicht einer Vorrichtung zum additiven Herstellen eines dreidimensionalen Objekts,
Figur 2 eine schematische, teilweise im Schnitt dargestellte Ansicht (Seitenansicht) eines Ausführungsbeispiels einer erfindungsgemäßen Prozessgas-Reinigungsvorrichtung zur Filterung von einem Prozessgas,
Figur 3 eine schematische, im Schnitt dargestellte Ansicht (Draufsicht) der Figur 2,
Figur 4 ein schematisches Ablaufdiagramm eines Verfahrens zur Prozessgasreinigung umfassend ein Ausführungsbeispiel eines erfindungsgemäßen Verfahrens zum Entfernen eines Sammelbehälters und ein Ausführungsbeispiel eines erfindungsgemäßen Verfahrens zum Entfernen von Filtereinheiten,
Figur 5 ein schematisches Ablaufdiagramm eines Ausführungsbeispiels eines erfindungsgemäßen Verfahrens zum Entfernen von Filtereinheiten
Figur 6 eine schematische, perspektivische Ansicht eines Ausführungsbeispiels einer erfindungsgemäßen Inertisierungsvorrichtung,
Figur 7 eine weitere schematische, perspektivische Ansicht der Inertisierungsvorrichtung aus Figur 6,
Figur 8 eine grob schematische Schnittansicht eines weiteren Ausführungsbeispiels einer erfindungsgemäßen Inertisierungsvorrichtung, die auf eine Filtereinheit aufgesetzt ist,
Figur 9 eine grob schematische Schnittansicht eines weiteren Ausführungsbeispiels einer erfindungsgemäßen Inertisierungsvorrichtung,
Figur 10 eine grob schematische Schnittansicht eines weiteren Ausführungsbeispiels einer erfindungsgemäßen Inertisierungsvorrichtung mit Gaspatrone und
Figur 11 eine grob schematische Schnittansicht eines weiteren Ausführungsbeispiels einer erfindungsgemäßen Inertisierungsvorrichtung mit Gaspatrone.

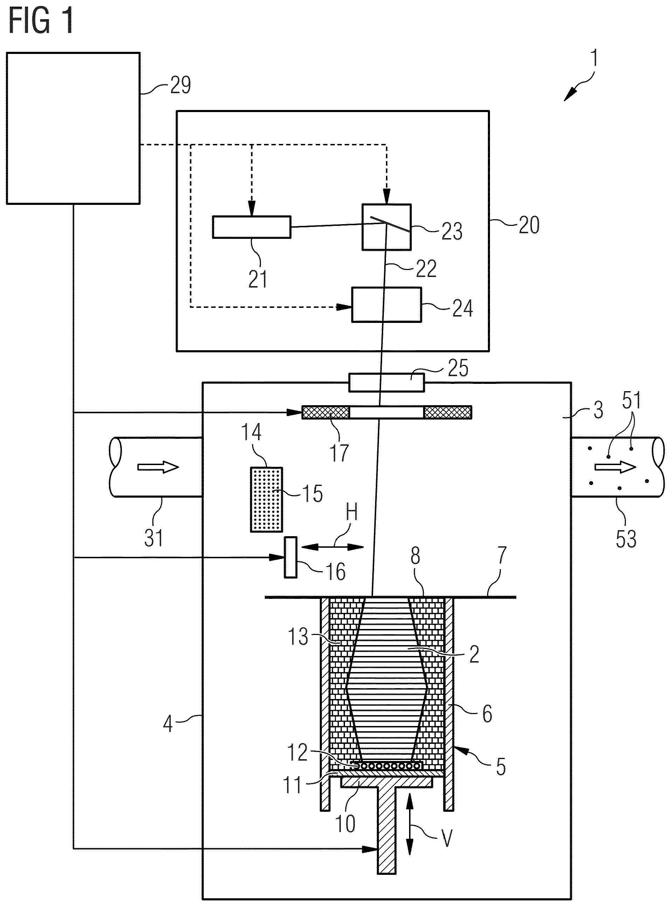

Im Folgenden wird mit Bezug auf Fig. 1 eine additive Herstellvorrichtung 1 für ein dreidimensionales Objekt beschrieben. Die in Fig. 1 dargestellte Herstellvorrichtung 1 ist eine selektiv wirkende Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird. Zudem umfasst die Prozesskammer 3 eine der Prozesskammer 3 zugeordnete Prozessgaszufuhr 31 sowie einen Prozessgasauslass 53.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Laserschmelzvorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des bevorrateten Aufbaumaterials 15 innerhalb des Baufelds 8. Vorzugsweise erstreckt sich der Beschichter 16 quer zu seiner Bewegungsrichtung über den ganzen zu beschichtenden Bereich.

Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Laserschmelzvorrichtung 1 umfasst ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Laserschmelzvorrichtung 1 eine Steuereinheit 29, über die die einzelnen Bestandteile der Laserschmelzvorrichtung 1 in koordinierter Weise zum Durchführen des Bauprozesses gesteuert werden. Alternativ kann die Steuereinheit auch teilweise oder ganz außerhalb der Laserschmelzvorrichtung 1 angebracht sein. Die Steuereinheit kann eine CPU enthalten, deren Betrieb durch ein Computerprogramm (Software) gesteuert wird. Das Computerprogramm kann getrennt von der Laserschmelzvorrichtung 1 auf einem Speichermedium gespeichert sein, von dem aus es in die Laserschmelzvorrichtung 1, insbesondere in die Steuereinheit geladen werden kann.

Als Aufbaumaterial 15 wird vorzugsweise ein pulverförmiges Material verwendet, wobei die Erfindung insbesondere auf Metallkondensate bildende Aufbaumaterialien gerichtet ist. Im Sinne einer Oxidationsreaktion und damit einer Feuergefährlichkeit sind hiervon insbesondere eisen- und/oder titanhaltige Aufbaumaterialien genannt, aber auch kupfer-, magnesium-, aluminium-, wolfram-, cobalt-, chrom-, und/oder nickelhaltige Materialien, sowie solche Elemente enthaltende Verbindungen.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8, bringt dort pulverförmiges Aufbaumaterial 15 auf die Bauunterlage 12 oder eine bereits vorhervorhandene Pulverschicht auf und zieht es zu einer Pulverschicht aus. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt.

Anschließend wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Dabei werden die Pulverkörner an diesen Stellen mittels der durch die Strahlung eingebrachten Energie teilweise oder vollständig aufgeschmolzen, so dass sie nach einer Abkühlung miteinander verbunden als Festkörper vorliegen. Diese Schritte werden so lange wiederholt, bis das Objekt 2 fertiggestellt ist und der Prozesskammer 3 entnommen werden kann.

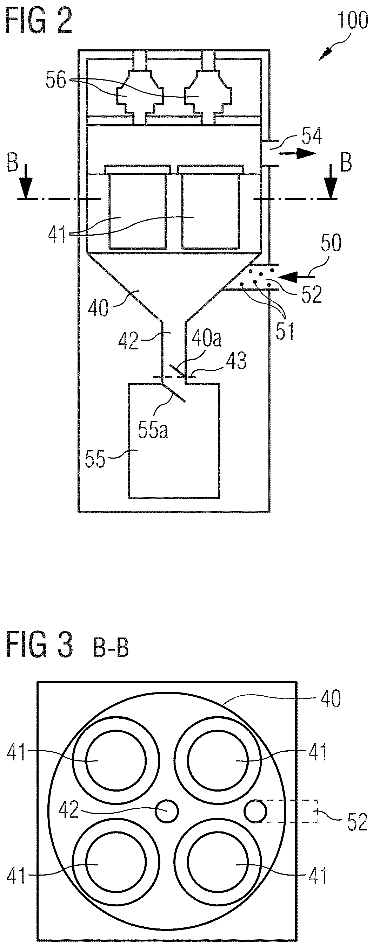

Figur 2 ist eine schematische, teilweise im Schnitt dargestellte Ansicht einer Prozessgas-Reinigungsvorrichtung 100 zur Filterung der Partikel 51 aus einem Prozessgas 50. Das mit Partikeln 51 beladene Prozessgas 50 tritt durch eine Zuführung 52 in die Prozessgas-Reinigungsvorrichtung 100 ein. Die als Zuführung 52 dargestellte Leitung kommt vom Auslass 53 des mit Partikeln 51 beladenen Prozessgases aus der Prozesskammer 3 (s. Figur 1). Das in die Prozessgas-Reinigungsvorrichtung 100 eintretende Prozessgas 50 strömt dann durch die Filterkammer 40, die hier die Form eines Trichters hat, der in den Sammelbehälter 55 mündet. Größere Partikel 51 werden vom trichterförmigen Rand der Filterkammer 40 in ein Rohr 42 und schließlich den Sammelbehälter 55 geleitet. Leichtere Partikel 51 werden mittels einer Filteranordnung, welche im gezeigten Beispiel vier Filtereinheiten 41 umfasst aus dem Prozessgas 50 herausgefiltert. Die Filtereinheiten 41 sind hier als im Wesentlichen zylindrische bzw. tonnenförmige Filter 41 ausgestaltet, sie können jedoch auch beispielsweise kugel- oder quaderförmig ausgestaltet sein. Über den Filtereinheiten 41 befinden sich Abreinigungseinheiten 56 mit Gastanks, welche beispielsweise mittels zyklischer Druckstöße die Filtereinheiten 41 reinigen können. Von den Filtereinheiten 41 entfernte Partikel 51 fallen vom Trichter und von dem Rohr 42 geleitet in den Sammelbehälter 55. Aus dem Reingasauslass 54 tritt das gefilterte Prozessgas wieder aus der Prozessgas-Reinigungsvorrichtung 100 aus.

Der Sammelbehälter weist ein gasdichtes und partikeldichtes erstes Schott 55a auf, das hier schematisch als einfache Klappe dargestellt ist. Es kann z. B. auch in Form einer Irisblende oder dergleichen ausgestaltet sein. Auch das zum Sammelbehälter 55 führende Rohr 42 der Filterkammer 40 weist ein gasdichtes und partikeldichtes zweites Schott 40a (schematisch dargestellt) auf. Bevor der Sammelbehälter 55 von der Prozessgas-Reinigungsvorrichtung 100 entfernt wird, werden beide Schotts 40a, 55a geschlossen, sodass weder auch der Filterkammer 40 noch aus dem Sammelbehälter 55 weder Gas noch Partikel 51 entweichen können. Die reaktiven, d. h. zumindest leichtentzündlichen, Partikel 51 sind somit unter eine Prozessgas- bzw. Inertgas-Atmosphäre in dem Sammelbehälter 55 eingeschlossen, sodass eine Entzündungsgefahr verringert bzw. vermieden wird. Weiterhin wird der Eintritt von Umgebungsluft in die Filterkammer 40 verhindert. Bei entferntem Sammelbehälter 55 kann z. B. das Rohr 42 als Zwischenbehälter dienen, um für die in der Zeit des Austauschs des Sammelbehälters 55 anfallenden Partikel 51 zwischen zu lagern.

Der Sammelbehälter 55 ist mit dem Rohr 42 über eine Kopplungsmechanismus 43 verbunden, wobei der Sammelbehälter 55 und das Rohr 42 komplementäre Kopplungsstücke aufweisen. Der Kopplungsmechanismus 43 lässt sich bevorzugt nur trennen, wenn beide Schotts 40a, 55a geschlossen sind, sodass die Prozessgas-Atmosphäre erhalten bleibt. Besonders bevorzugt werden beide Schotts 40a, 55a beim Entfernen des Sammelbehälters 55 mittels des Kopplungsmechanismus 43 automatisch geschlossen. Der Kopplungsmechanismus kann konstruktiv in verschiedener Form realisiert werden, z. B: als handelsüblicher Bajonettverschluss, als handelsüblicher Doppelklappenverschluss oder dergleichen.

Bevorzugt wird der gleiche Kopplungsmechanismus 43 bei allen Sammelbehältern 55 bzw. Prozessgas-Reinigungsvorrichtungen 100 in einem Maschinenpark verwendet, um die Sammelbehälter 55 flexibel auch bei verschiedenen Prozessgas-Reinigungsvorrichtungen 100 einsetzen und austauschen zu können.

Die Filterkammer 40 kann ein Überdruckventil umfassen. Dadurch ist eine höhere Inertgassättigung der internen Gasatmosphäre erzielbar, z. B. indem ein Anteil eingedrungenen Sauerstoffs durch fortlaufende Flutung mit Inertgas verdrängt bzw. verdünnt werden kann.

Figur 3 ist eine schematische, im Schnitt dargestellte Ansicht der Figur 2. Gut zu erkennen ist die Filteranordnung von vier Oberflächenfiltern 41, die als Filterpatronen ausgebildet sind. Zudem ist mittig das Rohr 42 angeordnet, das in den Sammelbehälter 55 mündet, und seitlich von außen bis in die Filterkammer 40 reichend ist die Zuführung 52 des Prozessgases 50 ausgebildet.

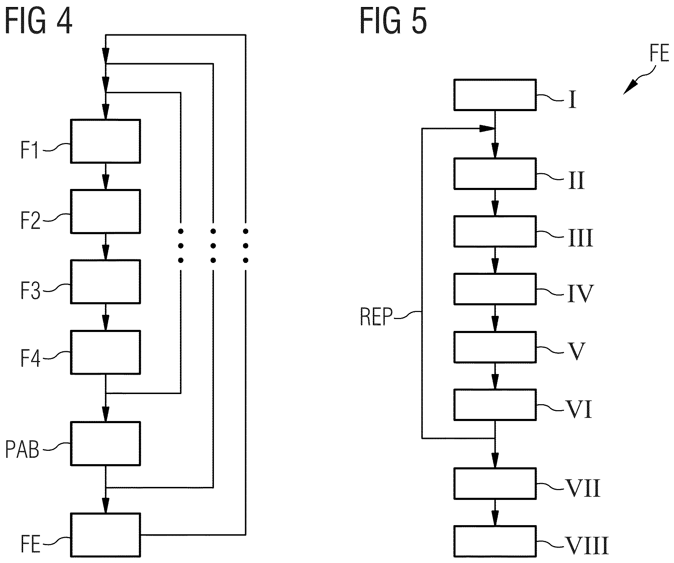

In Figur 4 ist ein schematisches Ablaufdiagramm eines Verfahrens zur Prozessgasreinigung dargestellt. Es umfasst ein Ausführungsbeispiel eines erfindungsgemäßen Verfahrens zum Entfernen eines Sammelbehälters PAB und ein Ausführungsbeispiel eines erfindungsgemäßen Verfahrens zum Entfernen von Filtereinheiten FE.

Wie oben bereits beschrieben, wird während des Verfahrens zur Prozessgasreinigung Prozessgas 50 in die Filterkammer 40 geleitet. Dabei können größere Partikel direkt in den Sammelbehälter 55 fallen, wohingegen sich leichtere Partikel 50 an den Filtereinheiten 41 anlagern. In einem Schritt F1 erfolgt eine Abreinigung einer ersten Filtereinheit 41 mittels Druckstoß. In den Schritten F2, F3 und F4 erfolgen analog die Abreinigungen der zweiten, dritten und vierten Filtereinheiten 41. Die Abreinigungsschritte F1, F2, F3, F4 können grundsätzlich zeitgleich erfolgen, bevorzugt werden sie jedoch sequenziell und mit zwischenzeitlichen Pausen durchgeführt.

Nach einer vorgegebenen Anzahl an Abreinigungsschritten F1, F2, F3, F4 oder je nach Füllstand des Sammelbehälters 55 wird das Verfahren PAB zum Entfernen des Sammelbehälters 55 durchgeführt. Das dafür erforderliche Inertgas 50 wird mittels der Prozessgas-Atmosphäre der Filterkammer 40 bereitgestellt. Mit dem Inertgas 50 ist der Sammelbehälter 55 im Regelbetrieb also ohne weiteres befüllt.

Der Sammelbehälter 55 wird dann mittels des ersten Schotts 55a gasdicht und partikeldicht verschlossen, sodass die Partikel 51 im Sammelbehälter vom Inertgas 50 eingeschlossen sind. Bevorzugt wird auch die Filterkammer 40 mittels des zweiten Schotts 40a gasdicht und partikeldicht verschlossen und anschließend der Sammelbehälter 55 unter Trennung des Kopplungsmechanismus 43 von der Prozessgas-Reinigungsvorrichtung 100 entfernt. Um die anfallenden Partikel 51 bestimmungsgemäß zu sammeln, wird möglichst zügig im Austausch ein anderer kompatibler Sammelbehälter 55 bereitgestellt und an die Prozessgas-Reinigungsvorrichtung 100 gekoppelt. Bevor der neue Sammelbehälter 55 jedoch an die Prozessgas-Reinigungsvorrichtung 100 gekoppelt wird, kann er zunächst mit dem jeweiligen Prozessgas befüllt werden, um eine Beeinträchtigung der Prozessgas-Atmosphäre in der Prozessgas-Reinigungsvorrichtung 100 bzw. der Laserschmelzvorrichtung 1 zu vermeiden.

Insbesondere bei sequenziell durchgeführten Abreinigungsschritten F1, F2, F3, F4 ist das Entfernen des Sammelbehälters 55 zeitlich unabhängig von den Abreinigungsschritten F1, F2, F3, F4. Es kann also zwischen beliebigen Abreinigungsschritten erfolgen, aber auch während jedes beliebigen Abreinigungsschritts, sodass die Prozessgas-Reinigungsvorrichtung 100 ununterbrochen weiterarbeiten kann.

Auch wenn die Filtereinheiten 41 mittels der Abreinigungsschritte F1, F2, F3, F4 möglichst lange betriebsfähig gehalten werden, ist es je nach Bedarf für eine gründlichere Reinigung oder Wartung erforderlich, auch die Filtereinheiten 41 aus der Prozessgas-Reinigungsvorrichtung 100 zu entfernen. Dies erfolgt im Schritt FE, der im Folgenden anhand von Figur 5 detailliert beschrieben ist.

Figur 5 zeigt ein Ausführungsbeispiel eines erfindungsgemäßen Verfahrens zum Entfernen von Filtereinheiten FE als schematisches Ablaufdiagramm. Zur Durchführung dieses Verfahrens muss die Prozessgas-Reinigungsvorrichtung 100 außer Betrieb genommen und in einem ersten Schritt I geöffnet werden, um auf Zugriff auf die Filtereinheiten 41 zu erhalten. Während des Öffnens und im offenen Zustand kann gegebenenfalls bereits Sauerstoff aus der Umgebungsluft in die Prozessgas-Reinigungsvorrichtung 100 eindringen und mit den an den Filtereinheiten 41 anhaftenden Partikeln 51 reagieren.

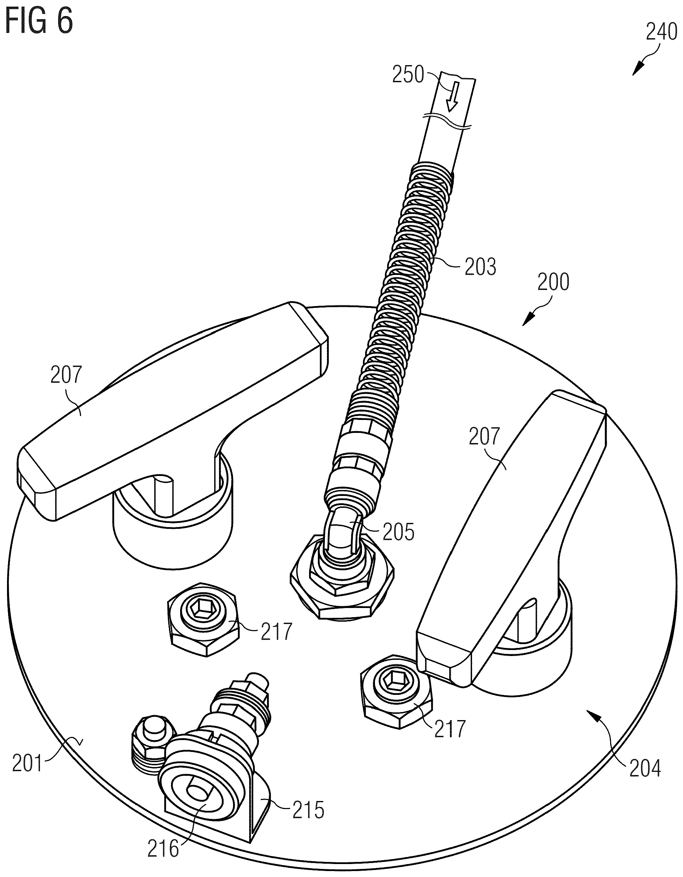

Daher wird in einem Schritt II möglichst zügig ein erstes Anschlussstück 200, 200a, 200b einer bevorzugt erfindungsgemäßen Inertisierungsvorrichtung 240, 200c, 200d auf eine der Filtereinheiten 41 aufgesetzt und gasdicht arretiert. Verschiedene erste Anschlussstücke 200, 200a, 200b der Inertisierungsvorrichtung 240, 200c, 200d werden anhand der Figuren 6 bis 11 noch im Detail beschrieben.

In einem unmittelbar darauffolgenden Schritt III wird mittels einer Gasversorgung der Inertisierungsvorrichtung 240 begonnen, die verbundene Filtereinheit 41 mit Inertgas zu beströmen. Das Inertgas wird dabei bevorzugt auf einen Innenraum der Filtereinheit 41 beaufschlagt, sodass es die Struktur der einzelnen Filterelemente nach außen hin durchdringt und daran anhaftende Partikel 51 in einer Wolke einschließt. Bei einer Filtereinheit 41 mit einem Kunststofffilterelement und einer Filteroberfläche von 2,4 m² beträgt der dazu verwendete Inertgas-Volumenstrom beispielsweise in etwa 60 L/min.

Ebenfalls möglichst zügig werden in einem bevorzugten Schritt IV die übrigen Filtereinheiten 41 mit Hilfe von zweiten Anschlussstücken in Form von passiven Deckeln abgedeckt, um auch hier das Eindringen von Sauerstoff in die Filterkammer 40 bzw. via den Hohlraum Filterkammer 40 an die Anzahl ggf. verbliebener Filtereinheiten 41 zu reduzieren bzw. zu vermeiden. Ein passiver, d. h. eine Inertatmosphäre in der Filterkammer 40 bewahrender, Deckel deckt in einer Betriebsposition eine Entnahmeöffnung (nicht gezeigt) in der Filterkammer 40 im Wesentlichen gasdicht ab. Bevorzugt bildet er einen Formschluss und/oder einen Kraftschluss mit der Entnahmeöffnung aus, der bei Bedarf lösbar ist. Der passive Deckel kann unterseitig eine geeignete Dichtung und oberseitig Griffe zur vereinfachten Handhabung umfassen.

Die Filtereinheit 41 wird in einem Schritt V zusammen mit dem ersten Anschlussstück 200, 200a, 200b der Inertisierungsvorrichtung 240, 200c, 200d vorsichtig aus der Filterkammer 40 entnommen und in einen geeigneten Schutzcontainer (nicht gezeigt) verbracht. Die Beströmung mit dem Inertgas 250 wird dabei ununterbrochen aufrechterhalten. Dadurch wird auch zumindest ein Teil der Umgebungsluft aus dem Schutzcontainer verdrängt. Möglichst rasch nach dem Entnehmen der Filtereinheit 41 aus der Filterkammer 40 wird vorzugsweise die entsprechende Entnahmeöffnung mit einem passiven Deckel abgedeckt, um auch an dieser Stelle das Eindringen von Sauerstoff in die Filterkammer 40 zu reduzieren bzw. zu vermeiden.

Das erste Anschlussstück 200, 200a, 200b der Inertisierungsvorrichtung 240, 200c, 200d ist zudem vorzugsweise mit einer Öffnung des Schutzcontainers durch Form- oder Kraftschluss zumindest in eine Richtung in den Schutzcontainer hinein gasdicht verbindbar. Der Schutzcontainer kann ein Überdruckventil (nicht gezeigt) aufweisen, sodass bei seinem gasdichten Verschluss eine Beströmung der in seinem Inneren angeordneten Filtereinheit mit Inertgas zumindest zeitweise fortgeführt werden kann. Alternativ kann nach seinem gasdichten Verschluss die Beströmung eingestellt werden, da die gasdichte Ausführung einen Zutritt von Umgebungssauerstoff zu den Partikeln verhindert und die Partikel dauerhaft von Inertgas umhüllt sind.

In einem optionalen Schritt VI wird die Filtereinheit 41 mit Hilfe von einem geeigneten Passivierungsmittel, wie z. B. Sand, in dem Schutzcontainer passiviert und kann dann im Wesentlichen gefahrlos transportiert bzw. weiterbehandelt werden.

Nach dem Verbringen in den Schutzcontainer bzw. nach der Passivierung kann die Arretierung der Inertisierungsvorrichtung 240, 200c, 200d gelöst werden. Im Anschluss können noch weitere Filtereinheiten 41 der Prozessgas-Reinigungsvorrichtung 100 entfernt werden. Die Schritte II bis VI werden dazu je nach Bedarf für die anderen Filtereinheiten 41 wiederholt. Vorzugsweise werden anschließend sukzessive die Deckel auf den Entnahmeöffnungen der Filterkammer 40 wieder entfernt.

In einem Schritt VII werden entsprechend der Anzahl der zuvor entfernten Filtereinheiten 41 neue bzw. wiederaufbereitete Filtereinheiten 41 in die Prozessgas-Reinigungsvorrichtung 100 eingesetzt. Da diese nicht mit selbstentzündlichen Partikeln behaftet sind, ist der Umgang mit ihnen im Wesentlichen gefahrlos.

In einem abschließenden Schritt VIII wird die Prozessgas-Reinigungsvorrichtung 100 wieder geschlossen, unter Prozessgas-Atmosphäre gesetzt und wieder in Betrieb genommen.

Sowohl der entfernte Sammelbehälter 55 als auch die entfernten Filtereinheiten 41 sowie die abgeschiedenen Partikel können geeigneten in jeweils anschließenden Verfahren wiederaufbereitet oder ggf. fachgerecht entsorgt werden.

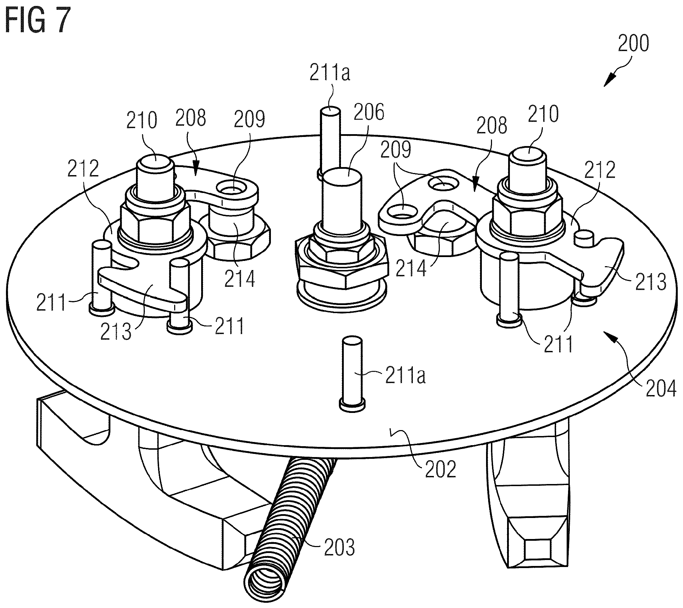

Die Figuren 6 und 7 zeigen unterschiedliche perspektivische Ansichten eines Ausführungsbeispiels einer erfindungsgemäßen Inertisierungsvorrichtung 240 mit einem ersten Anschlussstück 200. Die Inertisierungsvorrichtung 240 umfasst ein erstes Anschlussstück 200 sowie eine Inertgasversorgung (hier schematisch als zugeführtes Inertgas 250 dargestellt), die mit dem ersten Anschlussstück 200 mittels eines flexiblen Schlauchs 203 verbunden ist.

Das erste Anschlussstück 200 umfasst eine kreisförmige Grundplatte 204, die als Deckel für die patronenförmige Filtereinheit 41 dient. Die Grundplatte 204 weist eine Griffseite 201 und eine Filterseite 202 auf. Der flexible Schlauch 203 mündet auf der Griffseite 201 in ein Winkelstück 205. Das Winkelstück 205 dient zur Reduzierung der Bauhöhe und ist mit einem Ausströmstutzen 206 verbunden. Der Ausströmstutzen 206 ist senkrecht und mittig durch die Grundplatte 204 geführt und zu beiden Seiten der Grundplatte 204 mit Muttern befestigt bzw. gekontert.

In gleichem Abstand zum und auf einer Linie mit dem Mittelpunkt der Grundplatte sind auf der Griffseite 201 zwei Griffe 207 angeordnet und jeweils um ihre Mittelachse senkrecht zur Grundplatte 204 drehbar mittels je einer Welle 210 gelagert. Die Welle 210 ist auf der Mittelachse des jeweiligen Griffs 207 angeordnet und durch die Grundplatte hindurchgeführt. Sie verbindet die Griffe 207 jeweils starr mit einem hakenförmigen Drehriegel 212, der auf der Filterseite 202 angeordnet ist. Eine Drehung der Griffe 207 resultiert also auch in einer Drehung der Drehriegel 212.

Die Drehriegel 212 sind jeweils aus einem L-förmigen Hakenende 208 und einem T-förmigen Anschlagende 213 gebildet, die gegenüberliegend in Bezug zur Welle 210 bzw. der Drehachse der Griffe 207 angeordnet sind. Die Drehriegel 212 erstrecken sich im Wesentlichen parallel zur Grundplatte 204. Zwei senkrecht aus der Grundplatte 204 ragende Anschlagstifte 211 wirken jeweils als Anschlagpunkte für das Anschlagende 213 des Drehriegels 212. Die Anschlagstifte 211 sind dabei so angeordnet, dass sie die Drehung des Drehriegels 212 jeweils formschlüssig in zwei Positionen begrenzen. Diese Endpositionen der Drehung entsprechen jeweils zwei Rastungen, die als zwei kreisförmige Ausnehmungen 209 am Hakenende 208 ausgebildet sind. Eine Ausnehmung 209 ist dabei jeweils im Bereich des Winkels des L-förmigen Hakenendes 208 angeordnet. Die andere Ausnehmung 209 ist im Bereich des freien Endes des freien Schenkels des L-förmigen Hakenendes 208 angeordnet. In den Endpositionen der Drehung rastet in jeweils eine der Ausnehmungen 209 ein federnd gelagerter Raststift 214 ein und sichert den jeweiligen Drehriegel 212 samt Griff in dieser Position vor versehentlicher Betätigung. Die Raststifte sind jeweils auf der Griffseite 201 mittels Muttern 217 gekontert.

Auf der Filterseite 202 der Grundplatte 204 sind außerdem zwei Führungsstifte 211a angeordnet und mit der Grundplatte 204 verbunden. Die Führungsstifte 211a sind dabei so angeordnet, dass sie beim bestimmungsgemäßen Aufsetzen des Anschlussstücks 200 auf eine Filtereinheit 41 in Führungsöffnungen der Filtereinheit 41 eingeführt werden.

Dadurch wird ein Verdrehen des Anschlussstücks 200 gegenüber der Filtereinheit 31 verhindert und zudem eine exakte Positionierung des Anschlussstücks 200 auf der Filtereinheit 41 gewährleistet.

Auf der Griffseite 201 ist ferner mittels eines Winkels 215 ein Erdungsanschluss 216 leitend mit der Grundplatte 204 verbunden. Dadurch, dass mittels des Erdungsanschlusses 216 im bestimmungsgemäßen Gebrauch das erste Anschlussstück 200 und die Prozessgas-Reinigungsvorrichtung 100 auf das gleiche Potential gebracht werden, können statische Entladungen vermieden werden, deren Funken eine Entzündung von an einer Filtereinheit anlagernden Partikeln 51 verursachen könnten.

Beim bestimmungsgemäßen Gebrauch greifen die L-förmigen Hakenenden 208 und/oder Abschnitte des Anschlagendes 213 der Drehriegel 212 in entsprechende Ausnehmungen der Filtereinheiten 41 ein. Dadurch wird eine feste und starre Verbindung zwischen dem ersten Anschlussstück 200 und der Filtereinheit 41 hergestellt. Diese Verbindung erzeugt zudem einen Anpressdruck zwischen dem ersten Anschlussstück 200 und der Filtereinheit 41, sodass eine Öffnung zu einem Innenraum der Filtereinheit 41 weitestgehend gasdicht mittels der Grundplatte 204, die selbstdichtend ist oder eine entsprechend angeordnete Dichtung (nicht gezeigt) aufweist, verschlossen wird.

Der flexible Schlauch 203 ist bestimmungsgemäß an einen Inertgasvorrat angeschlossen. Bei dem Inertgasvorrat kann es sich beispielsweise um eine Gasflasche oder eine fest installierte Gasleitung handeln. Zur Regulierung des Volumenstroms des Inertgases sind bevorzugt ein Druckminderer, ein Stellventil und/oder ein manuell oder elektronisch einstellbarer Durchflussregler zwischengeschaltet. Weiterhin kann eine Abschalteinheit eingesetzt werden, welche die Zeitdauer der Schutzgaszufuhr begrenzt, um eine Erstickung des Personals - auch bei Fehlbedienung - auszuschließen.

Im bestimmungsgemäßen Gebrauch beströmt die Inertisierungsvorrichtung 240 eine verbundene Filtereinheit 41 mit Inertgas. Die so inertisierte Filtereinheit 41 kann aufgrund der starren Verbindung zur Inertisierungsvorrichtung 240 ohne Berührung der Filtereinheit 41 durch das Personal mittels der Griffe 207 aus der Prozessgas-Reinigungsvorrichtung 100 entnommen werden.

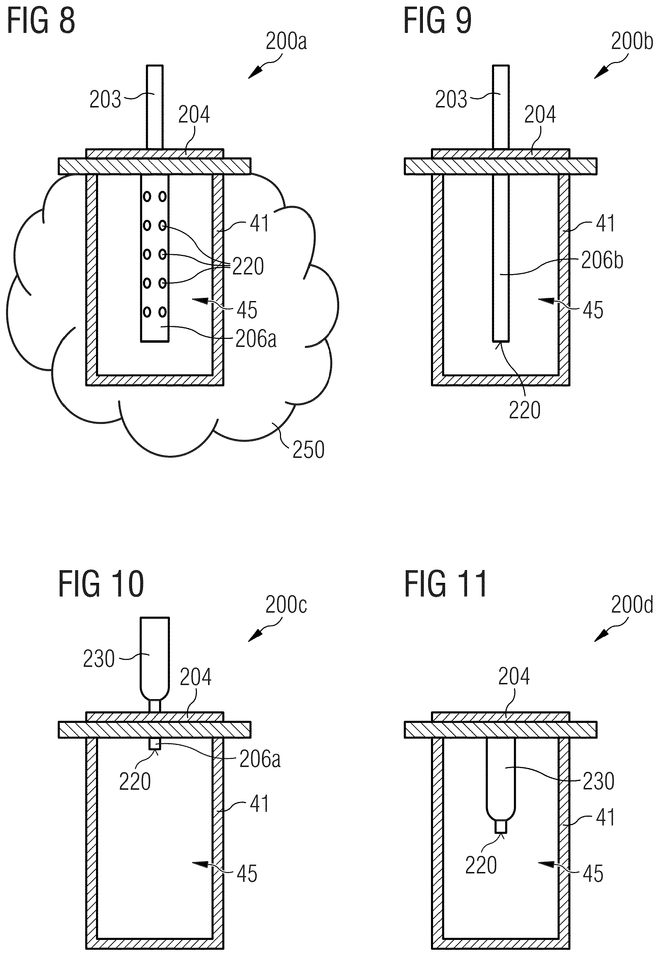

Figur 8 zeigt grobschematisch ein weiteres Ausführungsbeispiel eines ersten Anschlussstücks 200a einer erfindungsgemäßen Inertisierungsvorrichtung 240. Das erste Anschlussstück 200a ist grundsätzlich ähnlich zu dem in den Figuren 6 und 7 gezeigten ausgebildet und hier aufgesetzt auf eine Filtereinheit 41 im Betrieb dargestellt. Im Unterschied zu dem zuvor beschriebenen ersten Anschlussstück 200 ist der Ausströmstutzen 206a hier als längeres Rohr ausgestaltet und ragt somit weiter in einen Filterinnenraum 45 der Filtereinheit 41 hinein. Zudem sind über die Länge des Ausströmstutzens 206a verteilt Ausströmöffnungen 220 angeordnet, aus denen das Inertgas 250 in radialer Richtung ausströmt. Das Inertgas füllt zunächst den Filterinnenraum 45 und strömt dann durch das Medium bzw. die Struktur der Filterelemente der Filtereinheit 41 hindurch nach außen. Durch die homogene Verteilung der Ausströmöffnungen 220 kann auch eine homogene Verteilung der Inertgaswolke erreicht werden.

Figur 9 zeigt grobschematisch ein weiteres Ausführungsbeispiel eines ersten Anschlussstücks 200b einer erfindungsgemäßen Inertisierungsvorrichtung 240 ähnlich zu Figur 8. Im Unterschied zu Figur 8 weist der Ausströmstutzen 206b hier keine radialen Ausströmöffnungen 220 auf, sondern lediglich eine Ausströmöffnung 220, die auf die der Öffnung der Filtereinheit 41 gegenüberliegende Seite der Filtereinheit 41 weist. Diese Ausgestaltung des Ausströmstutzens 206b ist vorteilhaft, wenn sich die Partikel aufgrund der Anordnung bzw. Ausgestaltung der Filtereinheit 41 vornehmlich an der der Öffnung der Filtereinheit 41 gegenüberliegenden Seite der Filtereinheit 41 anlagern.

In Figur 10 ist grobschematisch ein Ausführungsbeispiel einer erfindungsgemäßen Inertisierungsvorrichtung 200c dargestellt. Die Inertisierungsvorrichtung 200c ist ähnlich zu den anhand der Figuren 8 und 9 beschriebenen ersten Anschlussstücken 200a, 200b, sie weist jedoch im Unterschied dazu eine Inertgasversorgung in Form einer Gaspatrone 230 auf. D. h. die Inertisierungsvorrichtung 200c ist hier als eine bei Bedarf lösbare Einheit gebildet, die die Inertgasversorgung und das erste Anschlussstück umfasst. Die Gaspatrone 230 ist hier auf der Griffseite 201 (vgl. Figur 6) angeordnet und strömt das Inertgas mittels eines Ausströmstutzens 206c durch die Grundplatte 204 hindurch in den Filterinnenraum 45 ein.

Figur 11 zeigt ähnlich wie Figur 10 ebenfalls ein Ausführungsbeispiel einer erfindungsgemäßen Inertisierungsvorrichtung 200d. Hier ist die Gaspatrone 230 jedoch im Unterschied zu Figur 10 auf der Filterseite 202 (vgl. Figur 6) der Grundplatte 204 des ersten Anschlussstücks angeordnet und ragt in den Filterinnenraum 45 hinein. Ein separater Ausströmstutzen ist hier nicht realisiert.

Es wird abschließend noch einmal darauf hingewiesen, dass es sich bei den vorhergehend detailliert beschriebenen Figuren lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit", "Vorrichtung" oder "Anordnung" nicht aus, dass diese aus mehreren zusammenwirkenden Teil-Komponenten bestehen, die gegebenenfalls auch räumlich verteilt sein können.

### Bezugszeichenliste

1 Laserschmelzvorrichtung
2 Objekt / Bauteil
3 Prozesskammer
4 Kammerwandung
5 Behälter
6 Behälterwandung
7 Arbeitsebene
8 Baufeld
10 Träger
11 Grundplatte
12 Bauplattform
13 unverfestigtes Aufbaumaterial
14 Vorratsbehälter
15 Aufbaumaterial
16 Beschichter
17 Strahlungsheizung
20 Bestrahlungsvorrichtung / Belichtungsvorrichtung
21 Laser
22 Laserstrahl
23 Umlenkvorrichtung / Scanner
24 Fokussiervorrichtung
25 Einkoppelfenster
29 Steuereinheit
31 Prozessgaszufuhr
40 Filterkammer
40a zweites Schott
41 Filtereinheit / Permanentfilter
42 Rohr
43 Kopplungsmechanismus
45 Filterinnenraum
50 Prozessgas
51 Partikel
52 Zuführung
53 Prozessgasauslass
54 Reingasauslass
55 Sammelbehälter
55a erstes Schott
56 Abreinigungseinheit
100 Prozessgas-Reinigungsvorrichtung
200, 200a, 200bAnschlussstück
201 Griffseite
202 Filterseite
203 Schlauch
204 Grundplatte
205 Winkelstück
206, 206a, 206b, 206c Ausströmstutzen
207 Griff
208 Hakenende
209 Ausnehmung
210 Welle
211 Anschlagstift
211a Führungsstift
212 Drehriegel
213 Anschlagende
214 Raststift
215 Winkel
216 Erdungsanschluss
217 Mutter
220 Ausströmöffnung
230 Gaspatrone
240, 200c, 200d Inertisierungsvorrichtung
250 Inertgaswolke
F1, F2, F3, F4 Abreinigungsschritt
FE Entfernung der Filtereinheit(en)
H horizontale Richtung
PAB Entfernung des Sammelbehälters
REP Wiederholung
V vertikale Richtung
I,II, ..., VIII Verfahrensschritte

## Patentansprüche

1. Verfahren zum Entfernen eines Teils (41, 55) einer Partikelsammelvorrichtung (40, 41, 42, 55), das mit zumindest leichtentzündlichen Partikeln (51) beladen ist, aus einer Prozessgas-Reinigungsvorrichtung (100) einer additiven Herstellvorrichtung (1) umfassend folgende Schritte:
a) Bereitstellen eines die Partikel (51) im Wesentlichen einschließenden Inertgases (50, 250) und
b) Entfernen des Teils (41, 55) der Partikelsammelvorrichtung (40, 41, 42, 55) aus der Prozessgas-Reinigungsvorrichtung (100), wobei der Einschluss der Partikel (51) im Inertgas (50, 250) beibehalten wird, wobei
die Partikelsammelvorrichtung (40, 41, 42, 55) zumindest eine erste Filtereinheit (41) umfasst, an der die Partikel (51) anhaften und die beim Entfernen derart mit dem Inertgas (250) beströmt wird, dass ein Einschluss der Partikel (51) im Inertgas (250) beibehalten wird.

2. Verfahren nach Anspruch 1, wobei die Beströmung mit dem Inertgas (250) bereits vor dem Entfernen erfolgt.

3. Verfahren nach einem der Ansprüche 1 bis 2, wobei eine Strömungsgeschwindigkeit durch eine Fläche der ersten Filtereinheit (41) mindestens 0,1 m/s, bevorzugt mindestens 0,3 m/s, weiter bevorzugt mindestens 0,5 m/s, besonders bevorzugt mindestens 1 m/s, und/oder höchstens 5 m/s, bevorzugt höchstens 3 m/s, besonders bevorzugt höchstens 2 m/s, beträgt.

4. Verfahren nach einem der Ansprüche 1 bis 3, wobei die Beströmung mit dem Inertgas (250) mithilfe einer zur ersten Filtereinheit (41) passenden Inertisierungsvorrichtung (240, 200c, 200d) erfolgt.

5. Verfahren nach einem der Ansprüche 1 bis 4, wobei die Partikelsammelvorrichtung (40, 41, 42, 55) zumindest eine zweite Filtereinheit (41) umfasst, die zumindest zeitweise während des Entfernens der ersten Filtereinheit (41) gegenüber einer Umgebungsatmosphäre abgeschottet wird.

6. Verfahren nach einem der vorstehenden Ansprüche, wobei die Partikelsammelvorrichtung (40, 41, 42, 55) einen Sammelbehälter (55) umfasst, der mit den Partikeln (51) befüllt ist und in dem bei oder vor dem Entfernen das Inertgas (50) und die Partikel (51) dicht gegen eindringendes Gas eingeschlossen werden.

7. Verfahren nach Anspruch 6, wobei das Entfernen des Sammelbehälters (55) zumindest zum Teil auch während eines Abscheidevorgangs (F1, F2, F3, F4) erfolgt, wobei die Partikel (51) bevorzugt in einem Zwischenbehälter (42) gesammelt werden und die Prozessgas-Reinigungsvorrichtung (100) unterbrechungsfrei weiterarbeitet.

8. Verfahren nach einem der vorstehenden Ansprüche, wobei das Verfahren nach einer Mehrzahl von Abscheidevorgängen (F1, F2, F3, F4) durchgeführt wird.

9. Verfahren nach einem der vorstehenden Ansprüche, wobei das Inertgas (50, 250) einen Stickstoffanteil und/oder Argonanteil von mindestens 45%, vorzugsweise von mindestens 90%, besonders bevorzugt von mindestens 99% aufweist.

10. Verfahren nach einem der vorstehenden Ansprüche, wobei nach dem Entfernen das Teil (41, 55) der Partikelsammelvorrichtung (40, 41, 42, 55) und/oder die gesammelten Partikel (51) entsorgt oder wiederaufbereitet werden.

11. Inertisierungsvorrichtung (240, 200c, 200d) für eine mit zumindest leichtentzündlichen Partikeln (51) behaftete erste Filtereinheit (41) einer Prozessgas-Reinigungsvorrichtung (100), umfassend ein zur ersten Filtereinheit (41) passendes erstes Anschlussstück (200, 200a, 200b) und eine Inertgasversorgung (203, 230) zur Beströmung der ersten Filtereinheit (41) mit Inertgas (250) beim Entfernen der ersten Filtereinheit (41), wobei die Inertisierungsvorrichtung dazu eingerichtet ist, die erste Filtereinheit (41) während des Vorgangs des Entfernens aus der Prozessgas-Reinigungsvorrichtung (100) derart mit Inertgas (250) zu beströmen, dass ein Einschluss der Partikel (51) im Inertgas (250) beibehalten wird.

12. Inertisierungsvorrichtung nach Anspruch 11, wobei zumindest das Anschlussstück (200, 200a, 200b) in Relation zur Prozessgas-Reinigungsvorrichtung (100) zumindest in einem Bereich beweglich ist und die Inertgasversorgung (203, 230) bevorzugt mittels eines flexiblen Schlauchs (203) oder einer Gaspatrone (230) erfolgt.

13. Inertisierungsvorrichtung nach Anspruch 11 oder 12, umfassend einen Ausströmstutzen (206, 206a) der eine Anzahl von Ausströmöffnungen (220) aufweist, wobei die Anzahl und eine Anordnung der Ausströmöffnungen (220) an eine Geometrie der ersten Filtereinheit (41) angepasst sind.

14. Inertisierungsvorrichtung nach einem der Ansprüche 11 bis 13 für die erste Filtereinheit (41) und zumindest eine mit zumindest leichtentzündlichen Partikeln (51) behaftete zweite Filtereinheit (41) einer Prozessgas-Reinigungsvorrichtung (100), umfassend ein zur zweiten Filtereinheit (41) passendes gasdichtes zweites Anschlussstück zur zumindest zeitweisen Abschottung der zweiten Filtereinheit (41) gegenüber einer Umgebungsatmosphäre während des Entfernens der ersten Filtereinheit (41).

15. Maschinenpark mit einer Inertisierungsvorrichtung (240, 200c, 200d) nach einem der Ansprüche 11 bis 14.

16. Maschinenpark nach Anspruch 15 mit zumindest einer additiven Herstellvorrichtung (1), die eine Prozessgas-Reinigungsvorrichtung (100) mit einem entfernbaren Sammelbehälter (55) für zumindest leichtentzündliche Partikel (51) umfasst, die in der Prozessgas-Reinigungsvorrichtung (100) abgeschieden werden, wobei der Sammelbehälter (55) ein gasdichtes erstes Schott (55a) aufweist, das ausgebildet ist, um die Partikel (51) beim Entfernen des Sammelbehälters (55) mit einem Inertgas (50) einzuschließen.

17. Maschinenpark nach Anspruch 15 oder 16, wobei die Prozessgas-Reinigungsvorrichtung eine Abscheidungsöffnung (42) und ein gasdichtes zweites Schott (40a) umfasst, das ausgebildet ist, um die Abscheidungsöffnung (42) bei oder vor dem Entfernen des Sammelbehälters (55) zu verschließen.

## Claims

1. A method for the removal of a part (41, 55) of a particle collecting device (40, 41, 42, 55), which part (41, 55) is loaded with at least highly flammable particles (51), from a process gas cleaning device (100) of an additive manufacturing device (1), comprising the following steps:
a) providing an inert gas (50, 250) which substantially encloses the particles (51),
b) removing the part (41, 55) of the particle collecting device (40, 41, 42, 55) from the process gas cleaning device (100), wherein the particles (51) remain enclosed in the inert gas (50, 250), wherein
the particle collecting device (40, 41, 42, 55) comprises at least one first filter unit (41) to which the particles (51) adhere and which is flushed with the inert gas (250) during removal in such a manner that the particles (51) remain enclosed in the inert gas.

2. The method as claimed in claim 1, wherein flushing with the inert gas (250) has already been carried out prior to removal.

3. The method as claimed in claim 1 or claim 2, wherein a flow rate through an area of the first filter unit (41) is at least 0.1 m/s, preferably at least 0.3 m/s, more preferably at least 0.5 m/s, particularly preferably at least 1 m/s, and/or at most 5 m/s, preferably at most 3 m/s, particularly preferably at most 2 m/s.

4. The method as claimed in one of claims 1 to 3, wherein flushing with the inert gas (250) is carried out with the aid of an inerting device (240, 200c, 200d) which is suitable for the first filter unit (41).

5. The method as claimed in one of claims 1 to 4, wherein the particle collecting device (40, 41, 42, 55) comprises at least one second filter unit (41) which is at least periodically isolated from an ambient atmosphere during removal of the first filter unit (41).

6. The method as claimed in one of the preceding claims, wherein the particle collecting device (40, 41, 42, 55) comprises a collecting container (55) which is filled with the particles (51) and in which, during or prior to removal, the inert gas (50) and the particles (51) are tightly sealed against the ingress of gas.

7. The method as claimed in claim 6, wherein at least part of the removal of the collecting container (55) is also carried out during a separation procedure (F1, F2, F3, F4), wherein the particles (51) are preferably collected in an intermediate container (42) and the process gas cleaning device (100) is operated without interruption.

8. The method as claimed in one of the preceding claims, wherein the method is carried out after a plurality of separation procedures (F1, F2, F3, F4).

9. The method as claimed in one of the preceding claims, wherein the inert gas (50, 250) has a fraction of nitrogen and/or a fraction of argon of at least 45%, preferably of at least 90%, particularly preferably of at least 99%.

10. The method as claimed in one of the preceding claims wherein, after removal, the part (41, 55) of the particle collecting device (40, 41, 42, 55) and/or the collected particles (51) are disposed of or recycled.

11. An inerting device (240, 200c, 200d) for a first filter unit (41) of a process gas cleaning device (100), which first filter unit (41) is loaded with at least highly flammable particles (51) comprising a connecting piece (200, 200a, 200b) adapted for the first filter unit (41) and an inert gas supply (203, 230) for flushing the first filter unit (41) with inert gas (250) when removing the first filter unit (41), wherein the inerting device is configured to flush the first filter unit (41) with inert gas (250) during the process of removing it from the process gas cleaning device (100) in such a manner that enclosure of the particles (51) in the inert gas (250) is maintained.

12. The inerting device as claimed in claim 11, wherein at least the connecting piece (200, 200a, 200b) can be moved in at least one region with respect to the process gas cleaning device (100) and the inert gas supply (203, 230) is preferably provided by means of a flexible tube (203) or a gas cartridge (230).

13. The inerting device as claimed in claim 11 or claim 12, comprising an outflow outlet (206, 206a) which has a number of outflow openings (220), wherein the number and the disposition of the outflow openings (220) are matched to the geometry of the first filter unit (41).

14. The inerting device as claimed in one of claims 11 to 13 for the first filter unit (41) and at least one second filter unit (41) of a process gas cleaning device (100), which second filter unit is loaded with at least highly flammable particles (51), comprising a gas-tight second connecting piece adapted for the second filter unit (41) for at least periodical isolation of the second filter unit (41) from an ambient atmosphere during the removal of the first filter unit (41).

15. A machine park with an inerting device (240, 200c, 200d) as claimed in one of claims 11 to 14.

16. The machine park as claimed in claim 15, with at least one additive manufacturing device (1) which comprises a process gas cleaning device (100) with a removable collecting container (55) for at least highly flammable particles (51) which are separated out in the process gas cleaning device (100), wherein the collecting container (55) has a gas-tight first bulkhead (55a) which is configured to enclose the particles (51) with an inert gas (50) when removing the collecting container (55).

17. The machine park as claimed in claim 15 or claim 16, wherein the process gas cleaning device comprises a separation opening (42) and a gas-tight second bulkhead (40a) which is configured to close the separation opening (42) during or prior to the removal of the collecting container (55).

## Revendications

1. Procédé, destiné à retirer d'un dispositif d'épuration (100) de gaz de processus d'un dispositif de fabrication (1) additive une partie (41, 55) d'un dispositif collecteur (40, 41, 42, 55) de particules, qui est chargée de particules (51) au moins facilement inflammables, comprenant les étapes suivantes, consistant à :
a) mettre à disposition un gaz inerte (50, 250), emprisonnant sensiblement les particules (51) et
b) retirer du dispositif d'épuration (100) de gaz de processus (100) la partie (41, 55) du dispositif collecteur (40, 41, 42, 55) de particules, l'emprisonnement des particules (51) dans le gaz inerte (50, 250) étant maintenu,
le dispositif collecteur (40, 41, 42, 55) de particules comprenant au moins une première unité de filtration (41) à laquelle les particules (51) adhèrent et qui, lors du retrait est affluée par le gaz inerte (250), de telle sorte qu'un emprisonnement des particules (51) dans le gaz inerte (250) soit maintenu.

2. Procédé selon la revendication 1, l'afflux du gaz inerte (250) ayant lieu déjà avant le retrait.

3. Procédé selon l'une quelconque des revendications 1 à 2, une vitesse d'écoulement à travers une surface de la première unité de filtration (41) étant d'au moins 0,1 m/s, de manière préférentielle, d'au moins 0,3 m/s, de manière plus préférentielle d'au moins 0,5 m/s, de manière particulièrement préférentielle, d'au moins 1 m/s, et / ou d'au plus 5 m/s, de manière préférentielle, d'au plus 3 m/s, de manière particulièrement préférentielle, d'au plus 2 m/s.

4. Procédé selon l'une quelconque des revendications 1 à 3, l'afflux du gaz inerte (250) ayant lieu à l'aide d'un dispositif d'inertisation (240, 200c, 200d) adapté à la première unité de filtration (41).

5. Procédé selon l'une quelconque des revendications 1 à 4, le dispositif collecteur (40, 41, 42, 55) de particules comprenant au moins une deuxième unité de filtration (41), qui pendant le retrait de la première unité de filtration (41), est cloisonnée au moins temporairement par rapport à l'atmosphère ambiante.

6. Procédé selon l'une quelconque des revendications précédentes, le dispositif collecteur (40, 41, 42, 55) de particules comprenant un récipient collecteur (55), qui est rempli avec les particules (51) et dans lequel lors du ou avant le retrait, le gaz inerte (50) et les particules (51) sont emprisonnés de manière étanche à la pénétration de gaz.

7. Procédé selon la revendication 6, le retrait du récipient collecteur (55) ayant lieu au moins partiellement également pendant un processus de séparation (F1, F2, F3, F4), les particules (51) étant collectées de manière préférentielle dans un récipient intermédiaire (42) et le dispositif d'épuration (100) de gaz de processus continuant à fonctionner sans interruption.

8. Procédé selon l'une quelconque des revendications précédentes, le procédé étant réalisé après une pluralité de processus de séparation (F1, F2, F3, F4).

9. Procédé selon l'une quelconque des revendications précédentes, le gaz inerte (50, 250) comportant une teneur en azote et / ou une teneur en argon d'au moins 45 %, de préférence d'au moins 90 %, de manière particulièrement préférentielle, d'au moins 99 %.

10. Procédé selon l'une quelconque des revendications précédentes, après le retrait, la partie (41, 55) du dispositif collecteur (40, 41, 42, 55) de particules et / ou les particules (51) collectées étant évacuées ou retraitées.

11. Dispositif d'inertisation (240, 200c, 200d) pour une première unité de filtration (41) d'un dispositif d'épuration (100), de gaz de processus, sur laquelle adhèrent des particules (51) au moins facilement inflammables, comprenant une première pièce de raccordement (200, 200a, 200b) adaptée à la première unité de filtration (41) et une alimentation (203, 230) de gaz inerte, pour faire affluer du gaz inerte (250) vers la première unité de filtration (41) lors du retrait de la première unité de filtration (41), le dispositif d'inertisation étant configuré pour faire affluer du gaz inerte (250) vers la première unité de filtration (41) pendant le processus de retrait hors du dispositif d'épuration (100) de gaz de processus de telle sorte qu'un emprisonnement des particules (51) dans le gaz inerte (250) soit maintenu..

12. Dispositif d'inertisation selon la revendication 11, au moins la pièce de raccordement (200, 200a, 200b) étant déplaçable au moins dans une zone, en relation avec le dispositif d'épuration (100) de gaz de processus et l'alimentation (203, 230) de gaz inerte ayant lieu de manière préférentielle au moyen d'un tuyau (203) flexible ou d'une cartouche de gaz (230).

13. Dispositif d'inertisation selon la revendication 11 ou 12, comprenant une tubulure d'échappement (206, 206a) qui comporte un nombre d'orifices d'échappement (220), le nombre et une disposition des orifices d'échappement (220) étant adaptés à une géométrie de la première unité de filtration (41).

14. Dispositif d'inertisation selon l'une quelconque des revendications 11 à 13 pour la première unité de filtration (41) et pour au moins une deuxième unité de filtration (41) d'un dispositif d'épuration (100) de gaz de processus, sur laquelle adhèrent des particules (51) au moins facilement inflammables, comprenant une deuxième pièce de raccordement étanche au gaz, adaptée à la deuxième unité de filtration (41), destinée à cloisonner au moins temporairement la deuxième unité de filtration (41) par rapport à une atmosphère environnante pendant le retrait de la première unité de filtration (41).

15. Parc de machines, doté d'un dispositif d'inertisation (240, 200c, 200d) selon l'une quelconque des revendications 11 à 14.

16. Parc de machines selon la revendication 15, doté d'au moins un dispositif de fabrication (1) additive, qui comprend un dispositif d'épuration (100) de gaz de processus, doté d'un récipient collecteur (55) amovible pour des particules (51) au moins facilement inflammables, qui sont séparées dans le dispositif d'épuration (100) de gaz de processus, le récipient collecteur (55) comportant une première cloison (55a) étanche au gaz qui est conçue pour emprisonner les particules (51) avec un gaz inerte (50), lors du retrait du récipient collecteur (55).

17. Parc de machines selon la revendication 15 ou 16, le dispositif d'épuration de gaz de processus comprenant un orifice de séparation (42) et une deuxième cloison (40a) étanche au gaz qui est conçue pour fermer l'orifice de séparation (42) lors du ou avant le retrait du récipient collecteur (55).
